# EUROPEAN PATENT APPLICATION

(11) **EP 4 819 686 A1**
(43) Date of publication of application: **07.10.2026**
(21) Application number: 25204169.4
(22) Date of filing: 23.09.2025
(51) Int. Cl.: H04W 36/00, H04W 36/14, H04W 36/36, H04W 36/08, H04W 36/30

(54) **NETWORK HANDOVER METHOD AND PRODUCT**

(30) Priority: 03.04.2025 CN 202510420171; 13.05.2025 CN 202510616556
(71) Applicant: Ecarx (Hubei) Tech Co., Ltd., Wuhan, Hubei 430056 (CN)
(72) Inventor: QIAN, Yongbo, Wuhan (CN); SHAO, Tiecheng, Wuhan (CN)
(74) Representative: Bandpay & Greuter

(57) **Abstract**

Embodiments of the present application provide a network handover method and a product. The method includes: a terminal, in response to a first trigger condition, performs a first network handover based on a first handover strategy, where the first handover strategy is a strategy for performing the first network handover through an artificial intelligence (AI) model at least based on feature data of the terminal. The terminal, in response to a second trigger condition, performs a second network handover based on a second handover strategy, where the second handover strategy is a strategy for performing the second network handover based on a measurement result of each available cell for the terminal. The first trigger condition and the second trigger condition are pre-configured trigger conditions.

## Description

### TECHNICAL FIELD

The present application relates to the technical field of artificial intelligence, communication, autonomous driving, etc., and in particular, to a network handover method and a product.

### BACKGROUND

In cell handover technology, a handover refers to a terminal performing a handover from one cell to another cell, so as to ensure that the terminal always accesses a best cell. Currently, the cell handover technology is mainly applied to mobile communication devices, and the terminal is, for example, a smartphone or a mobile hotspot device.

In the cell handover technology, the terminal can transmit a measurement report (MR) to a source network device. The source network device evaluates whether to initiate a cell handover based on the measurement report, or the source network device evaluates whether to initiate a cell handover through a core network based on the measurement report. When it is determined to initiate the cell handover, the source network device transmits a handover command to the terminal, and the handover command is used to instruct the terminal to perform a handover to another cell. The terminal performs the handover to another cell according to the handover command.

In related technologies, communication is performed between the terminal and the network device (e.g., the evaluation of whether to initiate the cell handover, the transmission of the handover command and so on), before the terminal can perform the handover to another cell. This leads to poor timeliness for the handover to another cell.

### SUMMARY

Embodiments of the present application provide a network handover method and a product, so as to achieve an effect of improving timeliness for a cell handover by a terminal.

In a first aspect, an embodiment of the present application provides a network handover method, applied to a terminal, including:
in response to a first trigger condition, performing a first network handover based on a first handover strategy, where the first handover strategy is a strategy for performing the first network handover through an artificial intelligence (AI) model at least based on feature data of the terminal;
in response to a second trigger condition, performing a second network handover based on a second handover strategy, where the second handover strategy is a strategy for performing the second network handover based on a measurement result of each available cell for the terminal;
where the first trigger condition and the second trigger condition are pre-configured trigger conditions, and the first trigger condition is different from the second trigger condition.

In a second aspect, an embodiment of the present application provides a network handover method, applied to a network device corresponding to a cell or a beam of a public land mobile network (PLMN), including:
transmitting, to a terminal, a network quality parameter corresponding to the cell or the beam, where the network quality parameter corresponding to the cell or the beam is processed by an artificial intelligence (AI) model of the terminal to obtain first identification information, and the first identification information is used by the terminal to perform a cell handover or a beam handover when a cell or a beam indicated by the first identification information is different from a serving cell or a serving beam of the terminal.

In a third aspect, an embodiment of the present application provides a network handover apparatus, and the apparatus executes the implementation according to the first aspect.

In a fourth aspect, an embodiment of the present application provides a network handover apparatus, and the apparatus executes the implementation according to the second aspect.

In a fifth aspect, an embodiment of the present application provides a terminal, including: a memory and a processor;
the memory is stored with computer-executable instructions;
the processor executes the computer-executable instructions stored in the memory, and the processor is caused to execute the implementation according to the first aspect.

In a sixth aspect, an embodiment of the present application provides a network device, including: a memory and a processor;
the memory is stored with computer-executable instructions;
the processor executes the computer-executable instructions stored in the memory, and the processor is caused to execute the implementation according to the second aspect.

In a seventh aspect, an embodiment of the present application provides a computer-readable storage medium, the computer-readable storage medium is stored with computer-executable instructions, and the computer-executable instructions, when executed by a processor, are used to implement the implementation of the first aspect or the implementation of the second aspect as described above.

In an eighth aspect, an embodiment of the present application provides a computer program product, including a computer program, and when the computer program is executed by a processor, the implementation of the first aspect or the implementation of the second aspect as described above is implemented.

In a ninth aspect, an embodiment of the present application provides a computer program, and when the computer program is executed by a processor, the implementation of the first aspect or the implementation of the second aspect as described above is implemented.

### BRIEF DESCRIPTION OF DRAWINGS

The drawings herein are incorporated into the specification and form a part of the specification. The drawings illustrate embodiments consistent with the present application, and are used to explain principles of the present application together with the specification.
FIG. 1A is a schematic diagram of a network handover method provided by an embodiment of the present application.
FIG. 1B is a schematic diagram of a scenario of inter-PLMN handover provided by an embodiment of the present application.
FIG. 2 is a first flowchart of a network handover method provided by an embodiment of the present application;
FIG. 3 is a second flowchart of a network handover method provided by an embodiment of the present application.
FIG. 4 is a third flowchart of a network handover method provided by an embodiment of the present application.
FIG. 5 is a fourth flowchart of a network handover method provided by an embodiment of the present application.
FIG. 6 is a first flowchart of obtaining an AI model provided by an embodiment of the present application.
FIG. 7 is a second flowchart of obtaining an AI model provided by an embodiment of the present application.
FIG. 8 is a flowchart of an interaction process between a first sub-model and a second sub-model provided by an embodiment of the present application.
FIG. 9 is a schematic diagram of another application scenario of a network handover method provided by the present application.
FIG. 10 is a fifth flowchart of a network handover method provided by the present application.
FIG. 11 is a flowchart of constructing an available cell list provided by the present application.
FIG. 12 is a flowchart of constructing a database cell table provided by the present application.
FIG. 13 is a structural diagram of a database cell table provided by the present application.
FIG. 14 is a flowchart of calculating a target overpassing satellite ID provided by the present application.
FIG. 15 is a sixth flowchart of a network handover method provided by the present application.
FIG. 16 is a seventh flowchart of a network handover method provided by the present application.
FIG. 17 is a first structural diagram of a network handover apparatus provided by an embodiment of the present application.
FIG. 18 is a second structural diagram of a network handover apparatus provided by an embodiment of the present application.
FIG. 19 is a structural diagram of a terminal provided by an embodiment of the present application.
FIG. 20 is a structural diagram of a network device provided by an embodiment of the present application.

Through the above drawings, explicit embodiments of the present application have been shown, which will be described in more detail later. These drawings and text description are not intended to limit the scope of the concept of the present application in any way, but to explain the concept of the present application to those skilled in the art by referring to specific embodiments.

### DESCRIPTION OF EMBODIMENTS

Exemplary embodiments will be described in detail here, examples of which are illustrated in accompanying drawings. When the following description involves the drawings, unless otherwise indicated, the same reference sign in different drawings represents the same or similar elements. The implementations described in the following exemplary embodiments do not represent all implementations consistent with the present application. On the contrary, they are merely examples of apparatuses and methods consistent with some aspects of the present application as detailed in the appended claims.

It should be noted that, both user information (including but not limited to information about a user device, personal information about a user, etc.) and data (including but not limited to data used for analysis, stored data, displayed data, etc.) involved in the present application are information and data that have been authorized by the user or fully authorized by all parties. The processing of related data, such as collection, storage, use, procession, transmission, provision, disclosure, and application, complies with relevant laws, regulations, and standards in relevant regions. It takes necessary confidentiality measures, and does not violate public policy, and a corresponding operation entry is provided for users to choose to authorization or refusal.

First, terms involved in the present application will be explained.

In the embodiments of the present application, terms such as "first", "second" and the like are used to distinguish identical or similar items that have substantially the same function and the same role. For example, a first value and a second value are only used to distinguish different values and do not limit their sequence. Those skilled in the art can understand that the terms such as "first", "second" and the like do not limit the quantity and the execution order, and the terms such as "first", "second" and the like do not mean that they are different.

It should be noted that, in the embodiments of the present application, words such as "exemplarily" or "for example" or the like are used to mean serving as an example, an illustration, or an explanation. Any embodiment or any design solution described as "exemplarily" or "for example" in the present application should not be interpreted as being more preferred or advantageous than other embodiments or other design solutions. Rather, the use of words such as "exemplarily" or "for example" or the like is intended to present related concepts in a specific manner.

In the embodiments of the present application, "at least one" refers to one or more, and "a plurality of/multiple" refers to two or more. "And/or" describes an association relationship of associated objects, and it indicates that there can be three types of relationships. For example, A and/or B can mean: A exists alone, both A and B exist, or B exists alone, where A and B can be singular or plural. The character "/" generally indicates that the associated objects before and after have an "or" relationship. "At least one of the following" or a similar expression refers to any combination of these items, including any combination of single items or plural items. For example, at least one of a, b, or c can mean: a, b, c, a-b, a-c, b-c, or a-b-c, where a, b, c can be single or multiple.

In some embodiments, terms such as greater than, greater than or equal to, not smaller than, more than, more than or equal to, not less than, higher than, higher than or equal to, not lower than, above, etc. can be used interchangeably, and terms such as smaller than, smaller than or equal to, not greater than, less than, less than or equal to, not more than, lower than, lower than or equal to, not higher than, below, etc. can be used interchangeably.

In some embodiments, a network device can be an access network device (AN device), a radio access network device (RAN device), a base station (BS), a radio base station, a fixed station, a node, an access point, a transmission point (TP), a reception point (RP), a transmission/reception point (TRP), a panel, an antenna panel, an antenna array, a cell, a macro cell, a small cell, a femto cell, a pico cell, a sector, a cell group, a serving cell, a carrier, a component carrier, a bandwidth part (BWP), etc.

In some embodiments, "/" means or, for example, "transmission / reception" means transmission or reception.

In some embodiments, a terminal can be a terminal, a terminal device, a user equipment (UE), a user terminal, a mobile station (MS), a subscriber station, a mobile unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client. The terminal can be a vehicle, or a terminal device, a user equipment, a user terminal, etc. in the vehicle.

The following explains technical terms involved in the present application.

### 1. Handover for cell handover technology

In cell handover technology, a handover refers to a terminal performing a handover from one cell to another cell, so as to ensure that the terminal always accesses the best cell, thereby ensuring that communication is not interrupted during a movement. Currently, the cell handover technology is mainly applied to mobile communication devices, and the terminal is, for example, a smartphone or a mobile hotspot device. In the cell handover technology, the terminal can transmit a measurement report (MR) to a source network device. The source network device evaluates whether to initiate a cell handover based on the measurement report, or the source network device evaluates whether to initiate a cell handover through a core network based on the measurement report. When it is determined to initiate the cell handover, the source network device transmits a handover command to the terminal, and the handover command is used to instruct the terminal to perform a handover to another cell. The terminal performs the handover to another cell according to the handover command. In related technologies, communication is performed between the terminal and the network device (e.g., the evaluation of whether to initiate the cell handover, the transmission of the handover command and so on), before the terminal can perform the handover to another cell. This leads to poor timeliness for the handover to another cell.

### 2. Inter-Public Land Mobile Network (PLMN) handover

PLMN handover refers to that a terminal performs a handover from one operator's mobile network to another operator's mobile network, so as to ensure that the terminal always accesses a best PLMN. Currently, inter-PLMN network handover technology is mainly applied to mobile communication devices, and the terminal is, for example, a smartphone or a mobile hotspot device. In the inter-PLMN handover technology, the terminal can transmit a measurement report (MR) to a source network device. The source network device evaluates whether to initiate an inter-PLMN handover based on the measurement report, or the source network device evaluates whether to initiate an inter-PLMN handover through a core network based on the measurement report. When it is determined to initiate the inter-PLMN handover, the source network device transmits a handover command to the terminal, and the handover command is used to instruct the terminal to perform a handover to another PLMN. The terminal performs the handover to another PLMN according to the handover command. In related technologies, communication is performed among the terminal, the network device, and the core network (e.g., the evaluation of whether to initiate the inter-PLMN handover and the transmission of the handover command), before the terminal can perform the handover to another PLMN. This leads to poor timeliness for the handover to another PLMN.

### 3. Related concepts about the cell handover

C-V2X (Cellular Vehicle-to-Everything) refers to a communication system based on cellular network technology, and aims at supporting communication between vehicles and the surrounding environment.

Cellular cell refers to a basic unit in a cellular communication system, which is a geographical area covered by a base station. In a cellular network, an entire service area is divided into multiple cells, and each cell is served by a base station that provides radio coverage and communication services.

Satellite cell refers to a geographical area covered by a satellite communication system. Unlike a traditional terrestrial cellular cell, a satellite cell uses a satellite as the base station to provide wide-area radio communication coverage. A satellite base station refers to a communication device hosted on a satellite, which is responsible for wireless communication with a terrestrial terminal (such as a satellite phone, a satellite communication module, etc.).

NTN (Non-Terrestrial Network) refers to a non-terrestrial network that uses a non-terrestrial communication infrastructure, such as a satellite, a high-altitude platform (such as a drone, a stratospheric balloon, etc.), to achieve global communication coverage.

Cellular network refers to a wireless communication network based on a terrestrial base station, and is usually composed of multiple cells. Each cell is served by a base station that provides coverage. Among them, a PLMN can be composed of multiple types of cellular technologies.

NR (New Radio) refers to 5G wireless access technology that delivers high data rates, low latency, and massive device connectivity.

RSRP (Reference Signal Received Power) refers to an average power of a reference signal received by the terminal in LTE and 5G networks. It is a key indicator for determining a signal strength, and is used for cell selection, handover decision, and network optimization. A higher RSRP value usually indicates a stronger signal coverage.

RSRQ (Reference Signal Received Quality) refers to a receiving quality of a reference signal. It combines RSRP and RSSI (Received Signal Strength Indicator) to assess a signal quality, and is used to determine a quality and an interference level of the signal. It plays an important role in cell reselection and a cell handover process, especially in high-interference environment.

SINR (Signal-to-Interference-plus-Noise Ratio) is a signal to interference plus noise ratio. It is an indicator for measuring the signal quality, represents a ratio of a desired signal power to a sum of interference and noise power, and is used to determine an actual communication quality of the network. A higher SINR value indicates a better signal quality and a higher data transmission rate.

RSSI (Received Signal Strength Indicator) is an indicator for a strength of the received signal. It represents all power received by the terminal, including a desired signal, interference and noise. It is used to determine a total signal strength, but because it includes the interference and noise, it cannot be used alone to determine the signal quality and is usually used in combination with other indicators.

In scenarios involving network handover, in related technologies, communication is performed between the terminal and the network device. For example, the network device evaluates whether to initiate the cell handover based on the measurement report transmitted by the terminal, transmits a handover command and the like. Then, the terminal is enabled to perform the handover to another cell. This leads to poor timeliness for the network handover.

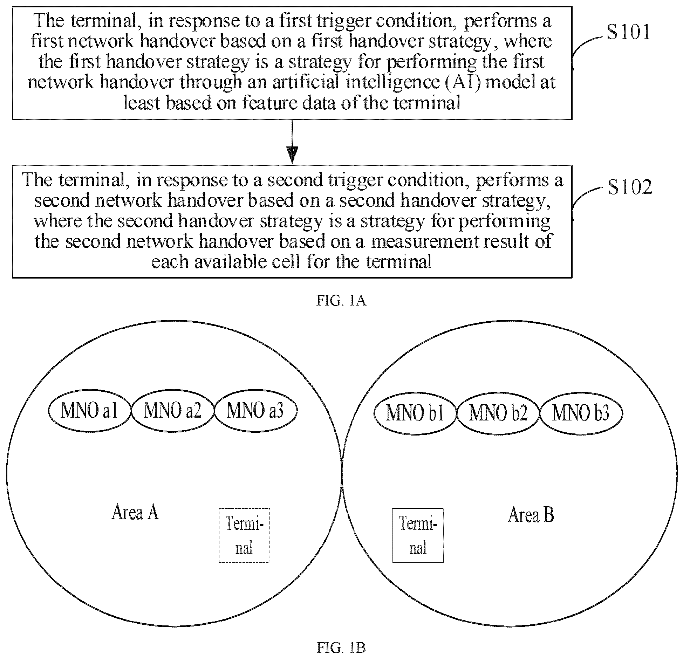

The present application provides a network handover method. In the method, the terminal performs the network handover according to a handover strategy, without any interaction between the terminal and the network device, thereby avoiding a handover delay, a connection interruption, etc., and thus improving the timeliness of the terminal's the network handover. Specifically, the terminal can perform the network handover based on a corresponding handover strategy under different trigger conditions. In an embodiment, as shown in FIG. 1A, the network handover method includes: S101, the terminal, in response to a first trigger condition, performs a first network handover based on a first handover strategy. The first handover strategy is a strategy for performing the first network handover through an artificial intelligence (AI) model at least based on feature data of the terminal. S102, the terminal, in response to a second trigger condition, performs a second network handover based on a second handover strategy. The second handover strategy is a strategy for performing the second network handover based on a measurement result of each available cell for the terminal. The first trigger condition and the second trigger condition are pre-configured trigger conditions, and the first trigger condition is different from the second trigger condition.

In an embodiment, the first trigger condition and/or the second trigger condition may include any one of the following: a signal quality parameter corresponding to a serving cell or a serving beam of the terminal being less than or equal to a preset quality threshold; a network performance parameter corresponding to the serving cell or the serving beam of the terminal becoming worse; a change in a type of scenario where the terminal is located; a change in a type of road where the terminal is located; or, a current mode of the terminal being an autonomous driving mode. Specifically, the first trigger condition and the second trigger condition can be configured based on actual needs. It should be noted that, in some cases, according to an initial configuration, the first network handover is originally performed based on the first handover strategy, but if the first handover strategy fails or malfunctions, the terminal can automatically switch to the second handover strategy to perform the second network handover, and vice versa, thereby achieving a redundant design and improving a reliability of the network handover.

A specific implementation of the two handover strategies will be introduced below.

FIG. 1B is a schematic diagram of a scenario of inter-PLMN handover provided by an embodiment of the present application. As shown in FIG. 1B, it includes a terminal, area A, and area B.

Area A includes PLMNs of multiple mobile network operators (MNOs). For example, the multiple MNOs in area A include MNO a1, MNO a2, MNO a3, etc.

Area B includes PLMNs of multiple mobile network operators (MNOs). For example, the multiple MNOs in area B include MNO b1, MNO b2, MNO b3, etc.

In some scenarios, a manufacturer of the terminal can sign service agreements with an MNO in area A and an MNO in area B. If the terminal crosses a border from area A to area B, a PLMN used by the terminal needs to be handed over from a PLMN of an MNO in area A to a PLMN of an MNO in area B.

In some other scenarios, the manufacturer of the terminal can sign a service agreement with an MNO in area A, and the MNO in area A can sign a roaming agreement with an MNO in area B. If the terminal crosses the border from area A to area B, the PLMN used by the terminal needs to be handed over from a PLMN of an MNO in area A to a PLMN of an MNO in area B that has signed the roaming agreement with the MNO in area A.

Optionally, if the terminal uses the existing technology to perform the handover from the PLMN of the MNO in area A to the PLMN of the MNO in area B that has signed the roaming agreement with the MNO in area A, the involved communication process includes: the terminal transmits a measurement report (MR) to a network device corresponding to the PLMN of the MNO in area A, the network device evaluates whether to initiate an inter-PLMN handover based on the measurement report, or the network device evaluates whether to initiate an inter-PLMN handover through the core network based on the measurement report. When it is determined to initiate the inter-PLMN handover, the network device transmits a handover command to the terminal, and the handover command is used to instruct the terminal to perform a handover to the PLMN of the MNO in area B. The terminal performs the handover to the PLMN of the MNO in area B according to the handover command.

During the above communication process, since communication needs to be carried out between the terminal, the network device, and the core network (such as the evaluation of whether to initiate the inter-PLMN handover and the transmission of the handover command), there will be a handover delay or a connection interruption. If the terminal is in autonomous driving mode at this time, it will lead to poor safety for the terminal.

In the network handover method provided by the embodiments of the present application, first identification information is determined from at least one cell of each PLMN according to network quality parameter(s) corresponding to at least one cell or at least one beam of each PLMN, and a cell handover or a beam handover is performed when a cell or a beam indicated by the first identification information is different from a serving cell or a serving beam of the terminal. It is unnecessary to perform communication between the terminal and the network device, to evaluate whether to initiate a cell handover and transmit a handover command, etc. It is also unnecessary to perform communication among the terminal, the network device and the core network, to evaluate whether to initiate an inter-PLMN handover and transmit a handover command. Thus, a handover delay, a connection interruption or the like can be avoided, thereby improving the timeliness of the cell handover or the beam handover of the terminal. In particular, when the terminal is in autonomous driving mode, the safety of the terminal can be improved.

The first handover strategy of the present application will be described in detail below with specific embodiments. The following specific embodiments can be combined with each other, and for the same or similar concepts or processes, they may not be repeated in some embodiments. The embodiments of the present application will be described below with reference to the accompanying drawings.

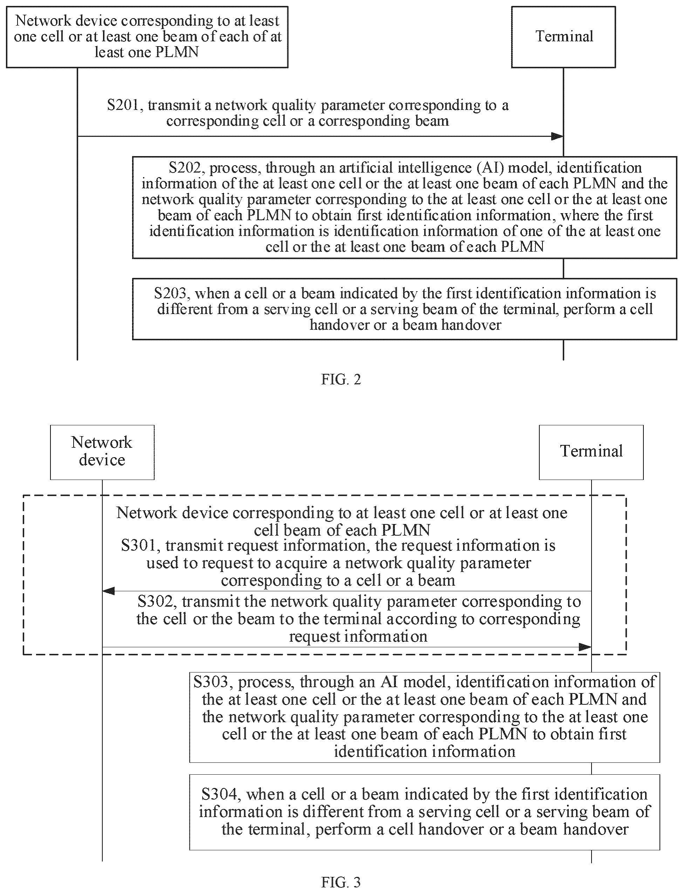

FIG. 2 is a first flowchart of a network handover method provided by an embodiment of the present application. As shown in FIG. 2, the method includes the following.

S201, a network device corresponding to at least one cell or at least one beam of each of at least one PLMN transmits a network quality parameter corresponding to a corresponding cell or a corresponding beam to the terminal. Correspondingly, the terminal receives the network quality parameter(s) corresponding to the at least one cell or the at least one beam of each PLMN.

In some embodiments, the at least one PLMN is a PLMN of at least one MNO.

In some embodiments, the at least one MNO may include MNOs in the same area or MNOs in different areas. Exemplarily, when the at least one MNO is in the same area, the at least one MNO may be, for example, at least one MNO in area A or at least one MNO in area B in FIG. 1B. Exemplarily, when the at least one MNO is in different areas, the at least one MNO includes, for example, at least one MNO in area A or at least one MNO in area B in FIG. 1B.

In some embodiments, the at least one PLMN includes a PLMN to which a serving cell or a serving beam of the terminal belongs.

For the PLMN to which the serving cell of the terminal belongs, the at least one cell of this PLMN may include the serving cell of the terminal, and may also include a neighbor cell of the serving cell in the PLMN.

For the PLMN to which the serving beam of the terminal belongs, the at least one beam of this PLMN may include the serving beam of the terminal, and may also include an adjacent beam of the serving beam in the PLMN.

For each PLMN among the at least one PLMN except the PLMN to which the serving cell of the terminal belongs, the at least one cell of this PLMN includes a neighbor cell of the serving cell in the PLMN. It should be understood that, the serving cell and the neighbor cell are adjacent to each other, but the serving cell and the neighbor cell belong to different PLMNs.

For each PLMN among the at least one PLMN except the PLMN to which the serving beam of the terminal belongs, the at least one beam of this PLMN includes an adjacent beam of the serving beam in the PLMN. It should be understood that the serving beam and the adjacent beam are adjacent to each other, but the serving beam and the adjacent beam belong to different PLMNs.

In some embodiments, the network quality parameter corresponding to the cell or the beam includes one or more of the following:
a network performance parameter corresponding to the cell or the beam;
a quality of service parameter corresponding to the cell or the beam; or,
a network state parameter corresponding to the cell or the beam.

In some embodiments, the network quality parameter corresponding to the cell includes one or more of the following:
a network performance parameter corresponding to the cell;
a quality of service parameter corresponding to the cell; or,
a network state parameter corresponding to the cell.

In some embodiments, the network quality parameter corresponding to the beam includes one or more of the following:
a network performance parameter corresponding to the beam;
a quality of service parameter corresponding to the beam; or,
a network state parameter corresponding to the beam.

In the embodiment of the present application, the network quality parameter corresponding to the cell or the beam includes one or more of: the network performance parameter corresponding to the cell or the beam, the quality of service parameter corresponding to the cell or the beam, or the network state parameter corresponding to the cell or the beam, thereby achieving a purpose of determining the first identification information based on multiple types of parameters, which helps improve an accuracy for a determination of the first identification information.

In some embodiments, the network performance parameter corresponding to the cell or the beam includes one or more of the following:
a bandwidth corresponding to the cell or the beam;
a latency corresponding to the cell or the beam;
a jitter corresponding to the cell or the beam;
a packet loss rate corresponding to the cell or the beam;
a throughput corresponding to the cell or the beam; or,
a bit error rate (BER) corresponding to the cell or the beam.

In some embodiments, the network performance parameter corresponding to the cell includes one or more of the following:
a bandwidth corresponding to the cell;
a latency corresponding to the cell;
a jitter corresponding to the cell;
a packet loss rate corresponding to the cell;
a throughput corresponding to the cell; or,
a bit error rate (BER) corresponding to the cell.

In some embodiments, the network performance parameter corresponding to the beam includes one or more of the following:
a bandwidth corresponding to the beam;
a latency corresponding to the beam;
a jitter corresponding to the beam;
a packet loss rate corresponding to the beam;
a throughput corresponding to the beam; or,
a bit error rate (BER) corresponding to the beam.

Among them, the bandwidth corresponding to the cell or the beam is used to characterize an amount of data that the network can transmit within the cell or the beam, usually in a unit of bits per second (bps), kilobits per second (Kbps), megabits per second (Mbps), or gigabits per second (Gbps).

Among them, the latency corresponding to the cell or the beam is used to characterize a time required for data to be transmitted from a source end to a destination end within the cell or the beam, usually in a unit of millisecond (ms).

Among them, the jitter corresponding to the cell or the beam is used to characterize a variation in data packet transmission delay within the cell or the beam, usually in a unit of millisecond (ms).

Among them, the packet loss rate corresponding to the cell or the beam is used to characterize a loss proportion of data packets during transmission within the cell or the beam, usually expressed as a percentage.

Among them, the throughput corresponding to the cell or the beam is used to characterize an amount of data successfully transmitted per unit time within the cell or the beam, usually in a unit of bps, Kbps, Mbps, or Gbps.

Among them, the bit error rate corresponding to the cell or the beam is used to characterize a ratio of the number of erroneous bits to a total number of transmitted bits during data transmission within the cell or the beam.

In some embodiments, the quality of service parameter corresponding to the cell or the beam includes one or more of the following:
a bandwidth guarantee of the cell or the beam;
a maximum latency of the cell or the beam;
a maximum jitter of the cell or the beam;
a maximum packet loss rate of the cell or the beam; or,
a priority of the cell or the beam.

Optionally, the bandwidth guarantee of the cell or the beam is a bandwidth reserved for a specific application or a specific service within the cell or the beam.

Optionally, the maximum latency of the cell or the beam is a maximum latency allowed for a specific application or a specific service within the cell or the beam.

Optionally, the maximum jitter of the cell or the beam is a maximum jitter allowed for a specific application or a specific service within the cell or the beam.

Optionally, the maximum packet loss rate of the cell or the beam is a maximum packet loss rate allowed for a specific application or a specific service within the cell or the beam.

Optionally, the priorities of the cell or the beam are priorities of different services within the cell or the beam. Among them, an autonomous driving service is a service with a highest priority.

In some embodiments, the network state parameter corresponding to the cell or the beam includes one or more of the following:
a network load of the cell or the beam;
a connection establishment time of the cell or the beam; or,
a service availability of the cell or the beam.

Optionally, the network load of the cell or the beam characterizes an amount of data being transmitted within the cell or the beam, usually expressed as a percentage of bandwidth.

Optionally, the connection establishment time of the cell or the beam characterizes a time required to establish a network connection in the cell or the beam, usually in a unit of millisecond (ms).

Optionally, the service availability of the cell or the beam characterizes a proportion of time that the network service is available in the cell or the beam within a specific time, usually expressed as a percentage.

S202, the terminal processes, through an artificial intelligence (AI) model, identification information of the at least one cell or the at least one beam of each PLMN and the network quality parameter corresponding to the at least one cell or the at least one beam of each PLMN to obtain first identification information, where the first identification information is identification information of one of the at least one cell or the at least one beam of each PLMN.

In some embodiments, the identification information of the cell includes an identifier (PLMN ID) of a PLMN to which the cell belongs and an identifier of the cell.

In some embodiments, the identifier of the cell includes, for example, a cell identifier (Cell ID) of the cell, or a physical cell identifier (PCI) of the cell.

In some embodiments, the identification information of the cell may further include one or more of the following:
a tracking area code (TAC) of the cell;
a downlink bandwidth (DL Bandwidth) of the cell; or,
an uplink bandwidth (UL Bandwidth) of the cell.

In some embodiments, the identification information of the beam includes an identifier of a PLMN to which the beam belongs and beam information of the beam.

In some embodiments, the identification information of the beam may further include one or more of the following:
a tracking area code (TAC) corresponding to the beam;
a downlink bandwidth (DL Bandwidth) corresponding to the beam; or,
an uplink bandwidth (UL Bandwidth) corresponding to the beam.

In some embodiments, the identification information of the at least one cell or the at least one beam of each PLMN is pre-configured in the terminal.

In some embodiments, the pre-configuration of the identification information of the at least one cell or the at least one beam of each PLMN in the terminal includes:
pre-configuring the identification information of the at least one cell or the at least one beam of each PLMN in an extensible markup language (XML) file of the terminal; or,
pre-configuring the identification information of the at least one cell or the at least one beam of each PLMN in a subscriber identity module (SIM) of the terminal.

In some embodiments, the XML file is a pre-configured XML file before the terminal leaves a factory.

In some embodiments, when the XML file needs to be updated, it can be updated via a cloud server based on over-the-air technology (OTA).

In some embodiments, if the identification information of the at least one cell or the at least one beam of each PLMN is pre-configured in the XML file of the terminal, a system application layer of the terminal can parse the XML file to obtain the identification information of the at least one cell or the at least one beam of each PLMN.

In some embodiments, if the identification information of the at least one cell or the at least one beam of each PLMN is pre-configured in the SIM the terminal, the system application layer of the terminal can also read the SIM to obtain the identification information of the at least one cell or the at least one beam of each PLMN.

In some embodiments, the identification information of the at least one cell or the at least one beam of each PLMN can also be hardware-encoded through a hardware abstraction layer (HAL) and be configured in the terminal.

In some embodiments, for each cell or each beam among the at least one cell or the at least one beam of each PLMN, the identification information of the cell or the beam is carried in a system message (System Information Block, SIB) transmitted by the network device corresponding to the cell or the beam to the terminal.

In some embodiments, one network device transmits one system message to the terminal, and the system message includes identification information of one cell or one beam.

In some embodiments, for each cell or each beam among the at least one cell or the at least one beam of each PLMN, the identification information of the cell or the beam is carried in equivalent public land mobile network (EPLMN) information transmitted by the network device corresponding to the cell or the beam to the terminal.

In some embodiments, one network device transmits one piece of EPLMN information to the terminal, and the EPLMN information includes identification information of one cell or one beam.

In some embodiments, when the identification information of the cell or the beam is carried in the system message/EPLMN information transmitted by the network device to the terminal, an SoC of the terminal can parse the system message/EPLMN information to obtain the identification information of the cell or the beam.

S203, when a cell or a beam indicated by the first identification information is different from a serving cell or a serving beam of the terminal, the terminal performs a cell handover or a beam handover.

In some embodiments, the terminal records identification information of the serving cell or the serving beam. When the first identification information is different from the identification information of the serving cell or the serving beam, it is determined that the cell or the beam indicated by the first identification information is different from the serving cell or the serving beam of the terminal, and then the terminal performs the cell handover or the beam handover.

In some embodiments, when the cell indicated by the first identification information is different from the serving cell of the terminal, the terminal performs the cell handover, that is, performs a handover between cells.

It is worth noting that, in a cellular network, when the cell or the beam indicated by the first identification information is different from the serving cell or the serving beam of the terminal, the cell handover is performed.

In some embodiments, performing the cell handover includes: performing a handover from the serving cell to the cell indicated by the first identification information. A PLMN to which the serving cell belongs is the same as a PLMN to which the cell indicated by the first identification information belongs, or a PLMN to which the serving cell belongs is different from a PLMN to which the cell indicated by the first identification information belongs.

In some embodiments, when the beam indicated by the first identification information is different from the serving beam of the terminal, the terminal performs the beam handover, that is, performs a handover between beams.

It is worth noting that, in a satellite network, when the beam indicated by the first identification information is different from the serving beam of the terminal, the beam handover is performed.

In some embodiments, performing the beam handover includes: performing a handover from the serving beam to the beam indicated by the first identification information. A PLMN to which the serving beam belongs is the same as a PLMN to which the beam indicated by the first identification information belongs, or a PLMN to which the serving beam belongs is different from a PLMN to which the beam indicated by the first identification information belongs.

In some embodiments, when a cellular network cell indicated by the first identification information is different from a satellite network serving beam of the terminal (or a satellite network beam indicated by the first identification information is different from a cellular network serving cell of the terminal), the terminal performs a handover between the cellular network cell and the satellite network serving beam (or, a handover between the satellite network beam and the cellular network serving cell).

It is worth noting that, in a converged network of cellular network and satellite network, when the beam indicated by the first identification information is different from the serving beam of the terminal (or the beam indicated by the first identification information is different from the serving cell of the terminal), the beam handover is performed.

In some embodiments, a system on chip (SoC) of the terminal can perform a network search operation according to the first identification information. When the cell or the beam indicated by the first identification information has been found, the cell or the beam is registered to a PLMN to which the cell or the beam indicated by the first identification information belongs, thereby achieving a handover to the cell or the beam indicated by the first identification information.

In some embodiments, the SoC can perform the network search operation according to the first identification information and based on a preset standard (e.g., 3GPP TS 23.122).

In some embodiments, when the cell or the beam indicated by the first identification information is the same as the serving cell or the serving beam, the terminal does not perform the cell handover or the beam handover. And S201 to S203 are repeated.

In some embodiments, when the first identification information includes an identifier of a PLMN to which the cell belongs and beam information corresponding to the cell, and the cell or the beam indicated by the first identification information is different from the serving cell or the serving beam of the terminal (e.g., the beam indicated by the first identification information is different from the beam of the serving cell), the beam handover is performed.

When the PLMN to which the serving cell or the serving beam belongs is the same as the PLMN to which the cell or the beam indicated by the first identification information belongs, a handover between different cells or different beams of the same PLMN can be achieved. When the PLMN to which the serving cell or the serving beam belongs is different from the PLMN to which the cell or the beam indicated by the first identification information belongs, a handover between cells or beams of different PLMNs can be achieved, that is, an inter-PLMN cell or beam handover can be achieved.

According to the first handover strategy provided by the embodiments of the present application, the terminal acquires the network quality parameter(s) corresponding to the at least one cell or the at least one beam of each PLMN, processes, through the artificial intelligence (AI) model, the identification information of the at least one cell or the at least one beam of each PLMN and the network quality parameter(s) corresponding to the at least one cell or the at least one beam of each PLMN to obtain the first identification information; and performs the cell handover or the beam handover when the cell or the beam indicated by the first identification information is different from the serving cell or the serving beam of the terminal. It is unnecessary to perform communication between the terminal and the network device, to evaluate whether to initiate the cell handover or the beam handover, transmit the handover command, etc. It is also unnecessary to perform communication among the terminal, the network device and the core network, to evaluate whether to initiate the inter-PLMN handover and transmit the handover command. Thus, the handover delay or the connection interruption or the like can be avoided, thereby improving the timeliness of the cell handover or the beam handover of the terminal. In particular, when the terminal is in autonomous driving mode, the safety of the terminal can be improved.

Different from the prior art, in the prior art, in a multi-operator core network (MOCN), the efficiency of the network handover is low. When an S1/N2 interface between the core network and the base station (eNodeB) is disconnected, the terminal needs to traverse multiple PLMNs to perform a PLMN handover, which leads to a long time-consuming process for the PLMN handover and affects user experience. By contrast, in the present application, when the S1/N2 interface between the core network and the base station (eNodeB) is disconnected, the AI model can be used to process the identification information of the at least one cell or the at least one beam of each PLMN and the network quality parameter(s) corresponding to the at least one cell or the at least one beam of each PLMN, so as to obtain the first identification information. When the cell or the beam indicated by the first identification information is different from the serving cell or the serving beam of the terminal, the cell handover or the beam handover is performed. When the PLMN to which the cell or the beam indicated by the first identification information belongs is different from the PLMN to which the serving cell or the serving beam of the terminal belongs, the inter-PLMN cell handover or the inter-PLMN beam handover can be achieved. It is unnecessary for the terminal to traverse multiple PLMNs to perform the PLMN handover, thus reducing the time consumed in the process for the PLMN handover and improving the user experience.

In some embodiments, the at least one PLMN is a PLMN that the terminal has accessed. Therefore, when the cell handover or the beam handover is performed, if the PLMN to which the cell or the beam indicated by the first identification information belongs is different from the PLMN to which the serving cell or the serving beam of the terminal belongs, then there is no need to access the PLMN to which the cell or the beam indicated by the first identification information belongs. This enables the terminal to perform a seamless handover between the PLMN to which the cell or the beam indicated by the first identification information belongs and the PLMN to which the serving cell or the serving beam of the terminal belongs, when the PLMN to which the cell or the beam indicated by the first identification information belongs is different from the PLMN to which the serving cell or the serving beam of the terminal belongs. It is beneficial for improving the timeliness of the inter-PLMN cell handover or the inter-PLMN beam handover of the terminal. In particular, when the terminal is in autonomous driving mode, the safety of the terminal can be improved.

FIG. 3 is a second flowchart of a network handover method provided by an embodiment of the present application. As shown in FIG. 3, the method includes the following.

S301, a terminal transmits request information to a network device corresponding to at least one cell or at least one cell beam of each PLMN. The request information is used to request to acquire a network quality parameter corresponding to a cell or a beam.

In some embodiments, the terminal transmits the request information to a network device corresponding to one cell or one beam of one PLMN. The request information is used to request to acquire a network quality parameter corresponding to this cell or this beam.

In some embodiments, the terminal transmits the request information to the network device corresponding to the at least one cell or the at least one beam of each PLMN according to identification information of the at least one cell or the at least one beam of each PLMN.

S302, the network device corresponding to the at least one cell or the at least one beam of each PLMN transmits the network quality parameter corresponding to the cell or the beam to the terminal according to corresponding request information.

In some embodiments, in a scenario of autonomous driving service, one network device transmits the network quality parameter corresponding to one cell or one beam to the terminal according to one piece of request information corresponding to that network device.

In some embodiments, a network device corresponding to one cell or one beam can transmit first information to the terminal, and the first information carries a network performance parameter corresponding to that cell or that beam.

In some embodiments, the first information is, for example, SIB or EPLMN information.

In some embodiments, for the description of the network quality parameter corresponding to the cell or the beam, reference may be made to S201, which will not be repeated here.

S303, the terminal processes, through an AI model, identification information of the at least one cell or the at least one beam of each PLMN and the network quality parameter corresponding to the at least one cell or the at least one beam of each PLMN to obtain first identification information.

In some embodiments, S303 can be elaborated through the methods shown in Example A1, Example A2, and Example A3 below.

Example A1, the terminal processes, through the AI model, the identification information of the at least one cell or the at least one beam of each PLMN and the network quality parameter(s) corresponding to the at least one cell or the at least one beam of each PLMN to obtain quality score(s) corresponding to the identification information of the at least one cell or the at least one beam of each PLMN. The terminal determines the identification information corresponding to a maximum quality score among the quality score(s) corresponding to the identification information of the at least one cell or the at least one beam of each PLMN as the first identification information.

It is worth noting that in Example A1, the AI model can output the identification information of the at least one cell or the at least one beam of each PLMN and the quality score(s) corresponding to the identification information of the at least one cell or the at least one beam of each PLMN.

Example A2, for each cell or each beam among the at least one cell or the at least one beam of each PLMN, the terminal determines a state corresponding to the cell or the beam according to a network quality parameter corresponding to the cell or the beam. The terminal processes state(s) of the at least one cell or the at least one beam of each PLMN through the AI model to obtain the first identification information. The first identification information is an action corresponding to a maximum Q value in a Q table of the AI model, and the action corresponding to the maximum Q value represents identification information corresponding to the maximum Q value.

Example A3, the identification information of the at least one cell or the at least one beam of each PLMN and the network quality parameter(s) corresponding to the at least one cell or the at least one beam of each PLMN are processed through a first sub-model in the AI model to obtain quality score(s) of the at least one cell or the at least one beam of each PLMN. The network quality parameter(s) corresponding to the at least one cell or the at least one beam of each PLMN and the quality score(s) of the at least one cell or the at least one beam of each PLMN are processed through a second sub-model in the AI model to obtain the first identification information.

In Example A3, the first sub-model can be the model in Example A1.

In Example A3, for each cell or each beam among the at least one cell or the at least one beam of each PLMN, the terminal determines a state corresponding to the cell or the beam according to the network quality parameter corresponding to the cell or the beam. The terminal processes the state(s) of the at least one cell or the at least one beam of each PLMN and the quality score(s) of the at least one cell or the at least one beam of each PLMN through the second sub-model to obtain the first identification information.

Exemplarily, an input of the AI model in Example A1 or the first sub-model in Example A3 is shown in Table 1 below.

**Table 1**

| Identification information of cells or beams | | Network quality parameters corresponding to cells or beams | |
|---|---|---|---|
| Identifiers of PLMNs | Identifiers of cells or beams | Throughput | Latency |
| 1 | 101 | 50 | 20 |
| 1 | 102 | 30 | 30 |
| 2 | 201 | 80 | 15 |
| 3 | 301 | 10 | 50 |

S304, when a cell or a beam indicated by the first identification information is different from a serving cell or a serving beam of the terminal, the terminal performs a cell handover or a beam handover.

Specifically, the execution of S304 is the same as that of S203, and will not be repeated here.

In the method provided by the embodiment of FIG. 3, the terminal transmits at least one piece of request information to at least one network device according to an identifier of the at least one cell of each PLMN, and the at least one network device transmits the network quality parameter(s) corresponding to the at least one cell or the at least one beam of each PLMN to the terminal according to its corresponding request information, thus preventing the at least one network device from transmitting the network quality parameter(s) in real time.

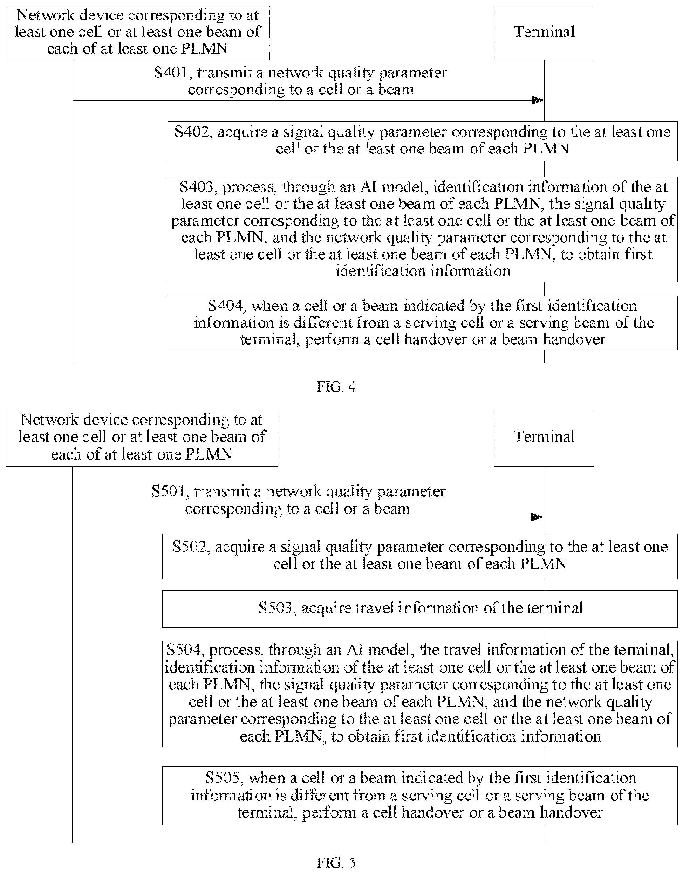

FIG. 4 is a third flowchart of a network handover method provided by an embodiment of the present application. As shown in FIG. 4, the method includes the following.

S401, a network device corresponding to at least one cell or at least one beam of each PLMN among at least one PLMN transmits a network quality parameter corresponding to a cell or a beam to a terminal.

In some embodiments, the terminal transmits request information to the network device corresponding to the at least one cell or the at least one beam of each PLMN among the at least one PLMN. The request information is used to request to acquire the network quality parameter(s) corresponding to the cell or the beam. The network device corresponding to the at least one cell or the at least one beam of each PLMN transmits the network quality parameter(s) corresponding to the cell or the beam to the terminal according to the request information.

Specifically, the terminal transmits one piece of request information to the network device corresponding to one cell or one beam of one PLMN. The request information is used to request to acquire a network quality parameter corresponding to that cell or that beam. The network device transmits the network quality parameter corresponding to that cell or that beam to the terminal according to the request information.

S402, the terminal acquires a signal quality parameter corresponding to the at least one cell or the at least one beam of each PLMN.

In some embodiments, a signal quality parameter corresponding to a cell or a beam is obtained by the terminal measuring a signal (e.g., a reference signal) transmitted by the network device corresponding to the cell or the beam.

In some embodiments, the signal quality parameter includes one or more of the following:
a reference signal received power (RSRP);
a reference signal received quality (RSRQ);
a received signal strength indicator (RSSI); or,
a signal-to-interference-plus-noise ratio (SINR).

Optionally, RSRP is used to describe a received power of the reference signal and measure a strength of a wireless signal.

Optionally, RSRQ is used to describe a signal quality of the reference signal.

Optionally, RSSI is an indicator used to measure a signal power strength detected by a receiving end (e.g., the terminal, or the network device).

Optionally, SINR is a ratio of a power of a desired signal to a power of interference and noise.

S403, the terminal processes, through an AI model, identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain first identification information.

In some embodiments, S403 can be elaborated through the methods shown in Example B1, Example B2, and Example B3 below.

Example B1, the terminal processes, through the AI model, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN, to obtain quality score(s) corresponding to the identification information of the at least one cell or the at least one beam of each PLMN. The terminal determines identification information corresponding to a maximum quality score among the quality score(s) corresponding to the identification information of the at least one cell or the at least one beam of each PLMN as the first identification information.

Example B2, for each cell or each beam among the at least one cell or the at least one beam of each PLMN, the terminal determines a state corresponding to the cell or the beam according to a signal quality parameter and a network quality parameter corresponding to the cell or the beam. The terminal processes state(s) of the at least one cell or the at least one beam of each PLMN through the AI model to obtain the first identification information. The first identification information is an action corresponding to a maximum Q value in a Q table of the AI model, and the action corresponding to the maximum Q value represents identification information corresponding to the maximum Q value.

Example B3, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN are processed through a first sub-model in the AI model to obtain quality score(s) of the at least one cell or the at least one beam of each PLMN. The signal quality parameter(s) corresponding to the at least one cell or the at least one beam of each PLMN, the network quality parameter(s) corresponding to the at least one cell or the at least one beam of each PLMN, and the quality score(s) of the at least one cell or the at least one beam of each PLMN are processed through a second sub-model in the AI model to obtain the first identification information.

In Example B3, the first sub-model can be the model in Example B1.

In Example B3, for each cell or each beam among the at least one cell or the at least one beam of each PLMN, a state corresponding to the cell or the beam is determined according to the signal quality parameter and the network quality parameter corresponding to the cell or the beam. The state(s) of the at least one cell or the at least one beam of each PLMN and the quality score(s) of the at least one cell or the at least one beam of each PLMN are processed through the second sub-model to obtain the first identification information.

Exemplarily, an input of the AI model in Example B1 or the first sub-model in Example B3 is shown in Table 2 below.

**Table 2**

| Identification information of cells or beams | | Signal quality parameters corresponding to cells or beams | | Network quality parameters corresponding to cells or beams | |
|---|---|---|---|---|---|
| Identifiers of PLMNs | Identifiers of cells or beams | RSRP | SINR | Throughput | Latency |
| 1 | 101 | -85 | 15 | 50 | 20 |
| 1 | 102 | -90 | 10 | 30 | 30 |
| 2 | 201 | -80 | 20 | 80 | 15 |
| 3 | 301 | -95 | 5 | 10 | 50 |

S404, when a cell or a beam indicated by the first identification information is different from a serving cell or a serving beam of the terminal, the terminal performs a cell handover or a beam handover.

In the network handover method provided by the embodiment of the present application, through the AI model, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN are processed to obtain the first identification information, thereby achieving the purpose of determining the first identification information based on both the signal quality parameter(s) and the network quality parameter(s) corresponding to the cell or the beam, which helps improve the accuracy of the determination of the first identification information. Furthermore, when the cell or the beam indicated by the first identification information is different from the serving cell or the serving beam, the cell handover or the beam handover is performed. It is unnecessary to evaluate whether to initiate the cell handover or the beam handover, transmit a handover command, etc. It is also unnecessary to evaluate whether to initiate an inter-PLMN handover and transmit a handover command. This can avoid a handover delay or a connection interruption, etc., thereby improving the timeliness of the cell handover or the beam handover of the terminal. In particular, when the terminal is in autonomous driving mode, the safety of the terminal can be improved.

FIG. 5 is a fourth flowchart of a network handover method provided by an embodiment of the present application. As shown in FIG. 5, the method includes the following.

S501, a network device corresponding to at least one cell or at least one beam of each PLMN among at least one PLMN transmits a network quality parameter corresponding to a cell or a beam to a terminal.

In some embodiments, an execution of S501 is the same as that of S401, and an execution process of S501 will not be repeated here.

S502, the terminal acquires a signal quality parameter corresponding to the at least one cell or the at least one beam of each PLMN.

In some embodiments, an execution of S502 is the same as that of S402, and an execution process of S502 will not be repeated here.

S503, the terminal acquires travel information of the terminal.

In some embodiments, the travel information of the terminal includes one or more of the following:
a weather type of scenario where the terminal is located;
location information of the terminal;
a type of scenario where the terminal is located;
a type of road where the terminal is located;
a travel speed of the terminal;
a travel direction of the terminal; or,
a traffic condition of the terminal.

In some embodiments, the weather type is, for example, sunny, rainy, or snowy.

In some embodiments, the location information of the terminal includes, for example, a longitude and/or a latitude of the terminal.

In some embodiments, the type of scenario is, for example, urban, rural, etc.

In some embodiments, the type of road is, for example, highway, tunnel, etc.

In some embodiments, a current traffic condition of the terminal is, for example, congested, smooth, etc.

In some embodiments, the weather type and the location information can be queried by the terminal from the Internet, or can be acquired by the terminal from a vehicle. It is worth noting that the terminal can be a terminal arranged in the vehicle.

In some embodiments, the type of scenario, the type of road, and the traffic condition can be acquired by the terminal from a road side unit (RSU).

In some embodiments, the travel speed and the travel direction can be acquired by the terminal from an electronic control unit (ECU) of the vehicle.

S504, the terminal processes, through an AI model, the travel information of the terminal, identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain first identification information.

In some embodiments, S504 can be elaborated through the methods shown in Example C1, Example C2, and Example C3 below.

Example C1, the terminal processes, through the AI model, the travel information of the terminal, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN, to obtain quality score(s) corresponding to the identification information of the at least one cell or the at least one beam of each PLMN. The terminal determines identification information corresponding to a maximum quality score among the quality score(s) corresponding to the identification information of the at least one cell or the at least one beam of each PLMN as the first identification information.

Example C2, for each cell or each beam among the at least one cell or the at least one beam of each PLMN, a state of the cell or the beam is determined according to the signal quality parameter and the network quality parameter corresponding to the cell or the beam, and the travel information of the terminal. The state(s) corresponding to the at least one cell or the at least one beam of each PLMN are processed through the AI model to obtain the first identification information. The first identification information is an action corresponding to a maximum Q value in a Q table of the AI model, and the action corresponding to the maximum Q value represents identification information corresponding to the maximum Q value.

Example C3, the travel information of the terminal, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN are processed through a first sub-model in the AI model to obtain quality score(s) of the at least one cell or the at least one beam of each PLMN. The travel information of the terminal, the signal quality parameter(s) corresponding to the at least one cell or the at least one beam of each PLMN, the network quality parameter(s) corresponding to the at least one cell or the at least one beam of each PLMN, and the quality score(s) of the at least one cell or the at least one beam of each PLMN are processed through a second sub-model in the AI model to obtain the first identification information.

In Example C3, the first sub-model can be the model in Example C1.

In Example C3, for each cell or each beam among the at least one cell or the at least one beam of each PLMN, the terminal determines a state corresponding to the cell or the beam according to a signal quality parameter and a network quality parameter corresponding to the cell or the beam, and the travel information of the terminal. The terminal processes the state(s) corresponding to the at least one cell or the at least one beam of each PLMN and the quality score(s) of the at least one cell or the at least one beam of each PLMN through the second sub-model to obtain the first identification information.

Exemplarily, an input of the AI model in Example C1 or the first sub-model in Example C3 is shown in Table 3 below.

**Table 3**

| Identification information of cells or beams | | Signal quality parameters corresponding to cells or beams | Travel information of the terminal | Network quality parameters corresponding to cells or beams |
|---|---|---|---|---|
| Identifiers of PLMNs | Identifiers of cells or beams | RSRP | Travel speed of the terminal | Throughput |
| 1 | 101 | -85 | 50 | 50 |
| 1 | 102 | -90 | 50 | 30 |
| 2 | 201 | -80 | 50 | 80 |
| 3 | 301 | -95 | 50 | 10 |

S505, when a cell or a beam indicated by the first identification information is different from a serving cell or a serving beam of the terminal, the terminal performs a cell handover or a beam handover.

Different from the prior art, existing network selection algorithms are mainly based on static signal strength and static network coverage, which lacks intelligent processing capabilities for dynamic environments and complex scenarios. In scenarios of autonomous driving, vehicles travel at high speeds and the environment is complex. The existing network selection algorithms are difficult to adapt to the travel speed and the environmental change, resulting in poor prediction accuracy of the network selection algorithms, which in turn reduces the accuracy of the selected network. By contrast, in the present application, the first identification information is obtained based on the travel information of the terminal, the signal quality parameter(s) corresponding to the at least one cell or the at least one beam of each PLMN, and the network quality parameter(s) corresponding to the at least one cell or the at least one beam of each PLMN. It takes into account the terminal's travel speed, the terminal's surrounding environment (such as the weather type of the scenario, the type of scenario, the type of road, and the traffic condition, etc.), so that the AI model can adapt to these changes, thereby improving the prediction accuracy of the AI model and further improving the accuracy of the obtained first identification information.

In the present application, the weather type of the scenario where the terminal is currently located may affect a signal strength and a network stability of a cell. The type of the scenario where the terminal is currently located and the type of the road where the terminal is currently located may also affect network coverage and a signal quality of the cell. The current location information of the terminal can help identify the coverage and the signal strength of the cell. The current travel speed of the terminal may affect a frequency and stability of cell handovers. The current travel direction of the terminal can help predict the future coverage of the cell. The current traffic condition of the terminal may affect the load and the performance of the cell. Therefore, in the present application, the first identification information is determined based on the travel information of the terminal, which can improve the accuracy of the first identification information.

In some embodiments, the travel information of the terminal can be travel information collected by the terminal.

In some embodiments, the travel information collected by the terminal includes, for example, one or more of the following:
a weather type of the scenario where the terminal is located, queried by the terminal from the Internet;
location information of the terminal, queried by the terminal from the Internet;
a type of scenario where the terminal is located, acquired by the terminal from an RSU;
a type of road where the terminal is located, acquired by the terminal from an RSU;
a traffic condition of the terminal, acquired by the terminal from an RSU;
a travel speed of the terminal, acquired by the terminal from an ECU of the vehicle;
a travel direction of the terminal, acquired by the terminal from an ECU of the vehicle.

In some embodiments, the travel information of the terminal can also be travel information of the terminal within a preset future duration, obtained through prediction based on the travel information collected by the terminal.

In some embodiments, the signal quality parameter(s) corresponding to the at least one cell or the at least one beam of each PLMN are signal quality parameter(s) corresponding to the at least one cell or the at least one beam of each PLMN measured by the terminal, or signal quality parameter(s) corresponding to the at least one cell or the at least one beam of each PLMN within a preset future duration, which is obtained through prediction based on the signal quality parameter(s) corresponding to the at least one cell or the at least one beam of each PLMN measured by the terminal.

In some embodiments, the network quality parameter(s) corresponding to the at least one cell or the at least one beam of each PLMN are network quality parameter(s) transmitted by a network device corresponding to the at least one cell or the at least one beam of each PLMN to the terminal, or network quality parameter(s) corresponding to the at least one cell or the at least one beam of each PLMN within a preset future duration, which is obtained through prediction based on the network quality parameter(s) transmitted by the network device corresponding to the at least one cell or the at least one beam of each PLMN to the terminal.

Exemplarily, the preset future duration is, for example, 5 minutes (min) to 10 minutes. It should be understood that the preset future duration can also be other values.

In some embodiments, the travel information of the terminal within the preset future duration can also be predicted based on the travel information of the terminal. The signal quality parameter(s) corresponding to the at least one cell or the at least one beam of each PLMN within the preset future duration can be predicted based on the signal quality parameter(s) corresponding to the at least one cell or the at least one beam of each PLMN. The network quality parameter(s) corresponding to the at least one cell or the at least one beam of each PLMN within the preset future duration can be predicted based on the network quality parameter(s) corresponding to the at least one cell or the at least one beam of each PLMN. The method shown in any one of the embodiments of FIG. 2 to FIG. 5 can be executed based on the travel information of the terminal within the preset future duration, the signal quality parameter(s) corresponding to the at least one cell or the at least one beam of each PLMN within the preset future duration, and the network quality parameter(s) corresponding to the at least one cell or the at least one beam of each PLMN within the preset future duration.

In the embodiment of the present application, the method shown in any one of the embodiments of FIG. 2 to FIG. 5 is executed based on the travel information of the terminal within the preset future duration, the signal quality parameter(s) corresponding to the at least one cell or the at least one beam of each PLMN within the preset future duration, and the network quality parameter(s) corresponding to the at least one cell or the at least one beam of each PLMN within the preset future duration, which can achieve an early determination of the first identification information, thereby achieving a predictive handover, and further achieving a seamless handover between the PLMN currently used by the terminal and the PLMN indicated by the first identification information, making the user unaware, ensuring a best network connection, and ensuring the safety and the stability of autonomous driving.

In the present application, when a preset condition (the aforementioned first trigger condition) is met, S202, S303, S403, or S504 is executed.

In some embodiments, the preset condition includes one or more of the following:
a signal quality parameter corresponding to the serving cell or the serving beam being less than or equal to a preset quality threshold;
a network performance parameter corresponding to the serving cell or the serving beam becoming worse;
a change in a type of scenario where the terminal is located;
a change in a type of road where the terminal is located; or,
a current mode of the terminal being autonomous driving mode.

In some embodiments, the network performance parameter corresponding to the serving cell or the serving beam of the terminal becoming worse includes one or more of the following:
a delay corresponding to the serving cell or the serving beam being greater than or equal to a preset delay threshold;
a bandwidth corresponding to the serving cell or the serving beam being less than a bandwidth required when the terminal is in autonomous driving mode;
a packet loss rate corresponding to the serving cell or the serving beam being greater than or equal to a preset packet loss rate threshold; or,
a bit error rate corresponding to the serving cell or the serving beam being greater than or equal to a preset bit error rate threshold.

In the embodiment of the present application, when the preset condition is met, the network handover method provided by the embodiments of the present application is executed, thereby preventing the terminal from frequently performing the cell handover or the beam handover, and thus helping save energy consumption of the terminal.

It should be noted that, regarding how to determine the first identification information, the above embodiments of FIG. 2 to FIG. 5 describe the implementations in which the first identification information can be determined through the AI model, for example, based on the identification information of the at least one cell or at least one beam of each PLMN, and the network quality parameter(s) corresponding to the at least one cell or at least one beam of each PLMN; or, based on the identification information of the at least one cell or at least one beam of each PLMN, the signal quality parameter(s) corresponding to the at least one cell or at least one beam of each PLMN, and the network quality parameter(s) corresponding to the at least one cell or at least one beam of each PLMN; or based on the travel information of the terminal, the identification information of the at least one cell or at least one beam of each PLMN, the signal quality parameter(s) corresponding to the at least one cell or at least one beam of each PLMN, and the network quality parameter(s) corresponding to the at least one cell or at least one beam of each PLMN. In some cases, in order to obtain the first identification information, the AI model may also perform processing based on at least one of: the identification information of the at least one cell or at least one beam of each PLMN, the network quality parameter(s) of the at least one cell or at least one beam of each PLMN, the signal quality parameter(s) of the at least one cell or at least one beam of each PLMN, or the travel information of the terminal, which is not limited in the present application.

In some embodiments, the AI models in Example A1, Example B1, and Example C1 are obtained by training a supervised learning model. The supervised learning model is, for example, a support vector machine (SVM).

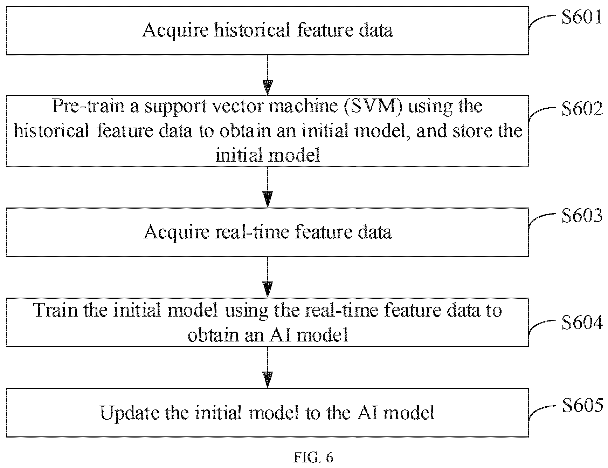

Hereinafter, a process of training the supervised learning model to obtain the AI model will be described with reference to the embodiment of FIG. 6.

FIG. 6 is a first flowchart of obtaining an AI model provided by an embodiment of the present application. As shown in FIG. 6, the method includes the following.

S601, acquire historical feature data.

In some embodiments, the historical feature data includes multiple sets of sample data.

Exemplarily, each set of sample data includes travel information of the terminal, identification information of one cell or one beam of one PLMN, a network quality parameter corresponding to that cell or that beam, and a signal quality parameter corresponding to that cell or that beam.

Exemplarily, the travel information of the terminal includes: location information of the terminal, a travel speed of the terminal, a travel direction of the terminal, a type of road where the terminal is located, a traffic condition of the terminal, and a weather type of the scenario where the terminal is located.

Exemplarily, the signal quality parameter corresponding to the cell or the beam includes: RSRP corresponding to the cell or the beam.

Exemplarily, the network quality parameter(s) corresponding to the cell or the beam include: a bandwidth corresponding to the cell or the beam, a delay corresponding to the cell or the beam, and a packet loss rate corresponding to the cell or the beam.

S602, pre-train the SVM using the historical feature data to obtain an initial model, and store the initial model.

In some embodiments, the historical feature data can be stored in a data structure, such as a comma-separated value (CSV) file, a database, or a data structure in a memory.

In some embodiments, a label score corresponding to each set of sample data in the historical feature data is determined, and the SVM is pre-trained according to each set of sample data and the label score corresponding to each set of sample data to obtain the initial model.

In some embodiments, determining a label score corresponding to a set of sample data includes: processing the set of sample data through a decision function of the SVM to obtain a decision result value, and processing the decision result value through a sigmoid function to obtain the label score corresponding to the set of sample data.

In some embodiments, determining a label score corresponding to a set of sample data includes: processing the set of sample data by using a first preset rule, to obtain the label score corresponding to the set of sample data.

Exemplarily, the first preset rule includes but is not limited to a weighted sum of parameters in the set of sample data.

In some embodiments, the initial model is obtained when the SVM has been pre-trained a preset number of times, or when model parameters of the SVM converge.

In some embodiments, the historical feature data is preprocessed, the preprocessed feature data is standardized, the SVM is pre-trained using the standardized historical feature data to obtain the initial model, and then the initial model is stored.

In some embodiments, preprocessing includes, for example, data cleaning, feature selection, etc.

Optionally, data cleaning includes one or more of: handling a missing value, removing an outlier, and removing a duplicate value.

Optionally, handling the missing value includes: deleting at least one set of sample data whose number of parameters is incorrect from multiple sets of sample data in the historical feature data. For example, a set of sample data should include 11 parameters, but some sets of sample data only include 10 parameters, then these sets are deleted.

Optionally, removing the outlier includes: deleting some sets of sample data that have a travel speed of 0 and lack location information.

Optionally, removing the duplicate value includes: for some identical sets of sample data among multiple sets of sample data, retaining only one set of sample data from the identical sets of sample data.

In some embodiments, the feature selection includes: selecting some parameters from each set of sample data. For example, a set of sample data includes: identification information of one cell or one beam of one PLMN, RSRP corresponding to the cell or the beam, a bandwidth corresponding to the cell or the beam, a delay corresponding to the cell or the beam, a packet loss rate corresponding to the cell or the beam, location information of the terminal, a travel speed of the terminal, a travel direction of the terminal, a type of road where the terminal is located, a traffic condition of the terminal, and a weather type of the scenario where the terminal is located. The selected parameters include: the identification information of one cell or one beam of one PLMN, the RSRP corresponding to the cell or the beam, the bandwidth corresponding to the cell or the beam, the delay corresponding to the cell or the beam, the packet loss rate corresponding to the cell or the beam, the location information of the terminal, the travel speed of the terminal, the type of road where the terminal is located, the traffic condition of the terminal, and the weather type of the scenario where the terminal is located.

In some embodiments, standardizing the preprocessed feature data includes: standardizing the RSRP corresponding to the cell or the beam, the bandwidth corresponding to the cell or the beam, the delay corresponding to the cell or the beam, the packet loss rate corresponding to the cell or the beam, the location information of the terminal, the travel speed of the terminal, the travel direction of the terminal, the type of road where the terminal is located, the traffic condition of the terminal, and the weather type of the scenario where the terminal is located, respectively.

Exemplarily, standardizing the RSRP corresponding to the cell or the beam includes: standardizing the RSRP corresponding to the cell or the beam according to a standard deviation value and a variance value corresponding to the RSRP. The standard deviation value corresponding to the RSRP is a standard deviation value of all RSRP in the multiple sets of sample data, and the variance value corresponding to the RSRP is a variance value of all RSRP in the multiple sets of sample data.

It is worth noting that, the standardizations of the bandwidth corresponding to the cell or the beam, the delay corresponding to the cell or the beam, the packet loss rate corresponding to the cell or the beam, and the travel speed of the terminal are similar to the standardization of the RSRP corresponding to the cell or the beam, which will not be repeated here.

Exemplarily, standardizing the travel direction of the terminal includes: quantifying the travel direction of the terminal into a corresponding value according to a second preset rule. The second preset rule is shown in Table 4 below.

**Table 4**

| Travel direction | Quantified value |
|---|---|
| Toward north | 0 |
| Toward south | 1 |
| Toward west | 2 |
| Toward east | 3 |

It is worth noting that, the standardizations of the type of road where the terminal is located, the traffic condition of the terminal, and the weather type of the scenario where the terminal is located are similar to the standardization of the travel direction of the terminal, which will not be repeated here.

In some embodiments, a label score corresponding to each set of sample data in the standardized historical feature data is determined, and the SVM is pre-trained according to each set of sample data and the label score corresponding to each set of sample data to obtain the initial model.

In some embodiments, determining a label score corresponding to a set of sample data in the standardized historical feature data includes: processing the set of sample data through a decision function of the SVM to obtain a decision result value, and processing the decision result value through a sigmoid function to obtain the label score corresponding to the set of sample data.

In some embodiments, determining a label score corresponding to a set of sample data in the standardized historical feature data includes: processing the set of sample data by using a first preset rule, to obtain the label score corresponding to the set of sample data.

In some embodiments, the initial model is obtained when the SVM has been pre-trained a preset number of times, or when model parameters of the SVM converge.

In some embodiments, the initial model can be determined as the AI model, and there is no need to execute S603 to S605 at this time.

S603, acquire real-time feature data.

In some embodiments, the real-time feature data includes feature parameters obtained by the terminal during a travel.

Exemplarily, the content included in the real-time feature data is similar to that of the historical feature data, which is not repeated here.

S604, train the initial model using the real-time feature data to obtain an AI model.

In some embodiments, an execution of S602 is similar to that of S604, and will not be repeated here.

S605, update the initial model to the AI model.

In some embodiments, the AI models in Example A2, Example B2, and Example C2 are obtained by training a reinforcement learning model. The reinforcement learning model is, for example, a model based on the Q-learning algorithm.

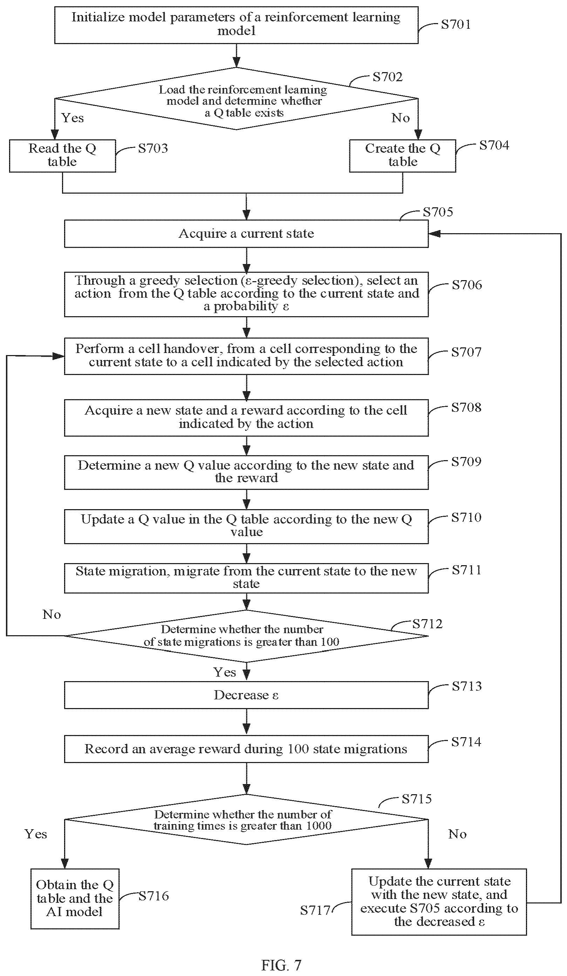

Hereinafter, the process of training the reinforcement learning model to obtain the AI model will be described with reference to the embodiment of FIG. 7.

FIG. 7 is a second flowchart of obtaining an AI model provided by an embodiment of the present application. As shown in FIG. 7, the method includes the following.

S701, initialize model parameters of the reinforcement learning model.

Exemplarily, after the initialization, the model parameters of the reinforcement learning model include: a learning rate a=0.1, a discount factor y=0.9, an exploration rate e=1.0→0.01.

S702, load the reinforcement learning model and determine whether a Q table exists.

If yes, execute S703.

Otherwise, execute S04.

S703, read the Q table.

S704, create the Q table.

In some embodiments, the Q table in S703 and S704 includes multiple actions, multiple states, and a Q value corresponding to each pair of action and state.

In some embodiments, the multiple actions can include identification information of each cell or each beam of each sample PLMN among multiple sample PLMNs. The multiple sample PLMNs include the aforementioned at least one PLMN.

In some embodiments, the multiple states can include a state of each cell of each sample PLMN determined by a method similar to the aforementioned Example A2, Example B2, or Example C2.

S705, acquire a current state.

When S705 is executed for the first time, the current state is any one of the following:
a state corresponding to a cell or a beam determined by the terminal according to a network quality parameter corresponding to one cell or one beam;
a state corresponding to a cell or a beam determined by the terminal according to a signal quality parameter and a network quality parameter corresponding to one cell or one beam; or,
a state of a cell determined by the terminal according to a signal quality parameter and a network quality parameter corresponding to one cell or one beam and the travel information of the terminal.

S706, through a greedy selection (ε-greedy selection), select an action (i.e., identification information of one cell or one beam) from the Q table according to the current state and a probability ε.

Optionally, the action can be randomly selected from the Q table with the probability ε.

Optionally, an action corresponding to a maximum Q value can be randomly selected from the Q table with a probability (1-ε).

S707, perform a cell handover, from a cell corresponding to the current state to a cell indicated by the selected action.

S708, acquire a new state and a reward according to the cell indicated by the action.

S709, determine a new Q value according to the new state and the reward. $\left[Q\left(s, a\right)←Q\left(s, a\right)+α\left[r+γ max\left(Q\left(s′,a′\right)\right)-Q\left(s, a\right)\right]\right]$ where s represents the current state, s' represents the new state, and the new Q value is Q(s, a) on the left side of "←". Q(s, a) represents a Q value for execution of an action a in a state s, max(Q(s', a')) represents a maximum value among Q values corresponding to all possible actions in a state s', r represents the reward, γ is the discount factor, and α is the learning rate.

S710, update a Q value in the Q table according to the new Q value.

In some embodiments, updating the Q value in the Q table according to the new Q value includes: updating Q(s, a) on the right side of "←" in S709 to Q(s, a) on the left side of "←".

S711, state migration, migrate from the current state to the new state.

S712, determine whether the number of state migrations is greater than 100.

If yes, execute S713.

Otherwise, execute S707.

S713, decrease ε.

S714, record an average reward during 100 state migrations.

S715, determine whether the number of training times is greater than 1000.

If yes, then execute S716.

Otherwise, execute S717.

S716, obtain the Q table and the AI model.

S717, update the current state with the new state, and continue to execute S705 according to the decreased ε.

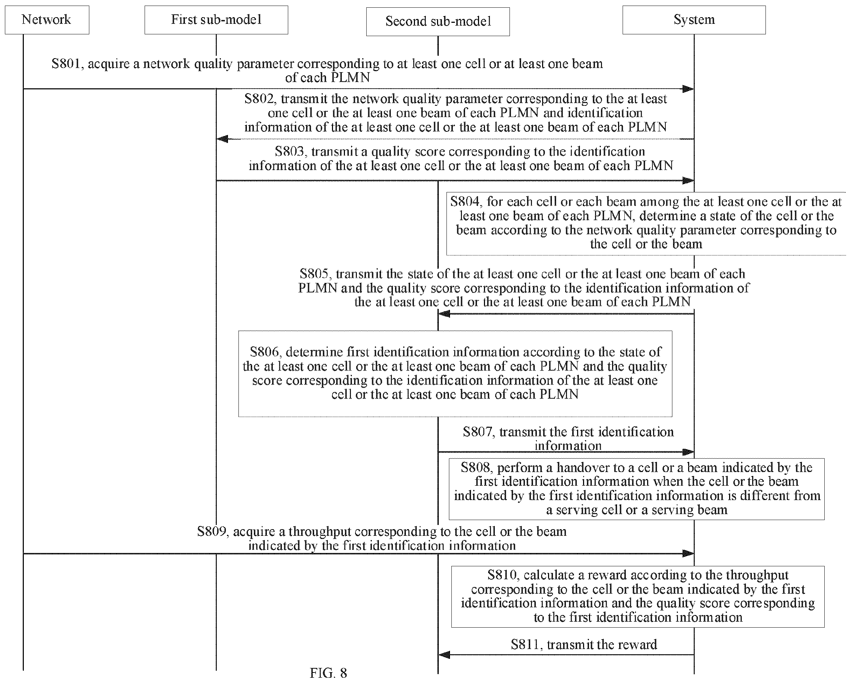

Based on Example A1, an example is taken where the second sub-model is a model based on the Q-learning algorithm, an interaction process between the first sub-model and the second sub-model will be described with reference to the embodiment of FIG. 8.

FIG. 8 is a flowchart of an interaction process between a first sub-model and a second sub-model provided by an embodiment of the present application. As shown in FIG. 8, the method includes the following.

S801, a system of the terminal acquires a network quality parameter corresponding to at least one cell or at least one beam of each PLMN from the network.

S802, the system of the terminal transmits the network quality parameter corresponding to the at least one cell or the at least one beam of each PLMN and identification information of the at least one cell or the at least one beam of each PLMN to the first sub-model.

S803, the first sub-model transmits a quality score corresponding to the identification information of the at least one cell or the at least one beam of each PLMN to the system of the terminal.

S804, for each cell or each beam among the at least one cell or the at least one beam of each PLMN, the system of the terminal determines a state of the cell or the beam according to the network quality parameter corresponding to the cell or the beam.

S805, the system of the terminal transmits the state of the at least one cell or the at least one beam of each PLMN and the quality score corresponding to the identification information of the at least one cell or the at least one beam of each PLMN to the second sub-model.

S806, the second sub-model determines first identification information according to the state of the at least one cell or the at least one beam of each PLMN and the quality score corresponding to the identification information of the at least one cell or the at least one beam of each PLMN.

S807, the second sub-model transmits the first identification information to the system of the terminal.

S808, the system of the terminal performs a handover to a cell or a beam indicated by the first identification information when the cell or the beam indicated by the first identification information is different from a serving cell or a serving beam of the terminal.

In some embodiments, a Q table of the second sub-model can also be updated through S809 to S811.

S809, the system of the terminal acquires a throughput corresponding to the cell or the beam indicated by the first identification information from the network. It should be noted that the throughput is only an example and can be replaced with other network performance parameters.

S810, the system of the terminal calculates a reward according to the throughput corresponding to the cell or the beam indicated by the first identification information and the quality score corresponding to the first identification information.

In some embodiments, reward r = throughput × 0.7 + quality score × 0.3.

S811, the system of the terminal transmits the reward to the second sub-model, so that the second sub-model updates the Q table according to the reward.

In some embodiments, an identification selection probability (e.g., the aforementioned probability ε) of the second sub-model can also be adjusted according to the quality score corresponding to the first identification information, so that the second sub-model updates the Q table according to the adjusted identification selection probability. In some embodiments, the second sub-model can also perform the update according to the reward and the adjusted identification selection probability. The present application has no limitation in this regard.

The implementation of the first handover strategy has been introduced above, and the implementation of the second handover strategy will be introduced below.

When a terrestrial network coverage is insufficient or a terrestrial network is unavailable, a terminal device needs to perform a cell change in a mobile communication network to maintain communication continuity and communication service quality, thereby ensuring service stability and service continuity in various mobile scenarios. For example, in a C-V2X scenario supported by a cellular network (e.g., 3G, 4G, 5G networks) and a 5G NTN network, it can provide an extensive communication coverage and stable connections for terminals on land, marine, low-altitude, and space, which is crucial for realizing various application scenarios in high-level autonomous driving (e.g., advanced driving, remote driving, cooperative driving, environmental perception, and vehicle platooning). Therefore, it is necessary to ensure the network continuity in the C-V2X scenario to enhance the service quality.

In related technologies, during a process of the cell change, a network side determines an optimal cell at a current location of the terminal device based on historically registered cell information and pre-configured cell information (e.g., cell ID and signal quality) of the terminal device, generates and delivers a handover instruction for that cell to the terminal device. The terminal device performs the cell change upon receiving the handover instruction. However, the cell information on which the handover instruction delivered by the network side is based has a lag and is difficult to reflect the actual cell information, which easily reduces a network signal quality after the terminal device changes the cell, further reducing the service stability and the service continuity of the terminal device. Additionally, since the terminal device relies on the handover instruction from the network side for a cell handover, it is difficult for the terminal device to quickly and smoothly perform the cell handover when the network signal quality is poor, further reducing the service quality of the terminal device in various scenarios.

In the second handover strategy provided by the present application, the terminal device performs a network registration based on a power-on instruction, and monitors a network condition of a current serving cell to obtain signal quality data of the current serving cell and a duration corresponding to the signal quality data of the current serving cell. When the signal quality data is lower than a first preset threshold and the duration of the signal quality data being lower than the first preset threshold exceeds a first preset time, an ephemeris calculation and an ephemeris estimation are performed based on current location information, current time information, and current ephemeris data to obtain a target overpassing satellite ID that will reach the terminal device earliest. Based on a real-time updated database cell table, the corresponding available satellite cell information is looked up in the database cell table according to the target overpassing satellite ID. At the same time, a corresponding public land mobile network identifier is determined from the database cell table based on the current location information, thereby further determining the corresponding available cellular cell information. An available cell list is constructed. The available cell list is generated based on the available satellite cell information, the available cellular cell information, and system information received in real time. The aforementioned real-time updated database cell table is obtained through dynamic updates based on system information delivered in real time by the network side, terminal sharing information, and OTA (Over-The-Air technology) information pushed by the cloud, thereby ensuring accuracy and comprehensiveness of the data. After obtaining the available cell list, signal quality of the cell(s) in the available cell list is measured based on a preset measurement strategy. It is determined whether a cell meets a preset communication condition based on the measured signal quality data and the measured duration of the cell, thereby determining a target cell based on a determination result. Thus, when the target cell is a cellular cell, the current network is switched to a cellular network corresponding to the cellular cell, and when the target cell is a satellite cell, the current network is switched to a non-terrestrial network corresponding to the satellite cell. In the present application, the dynamically updated database cell table provides a reliable basis for constructing the available cell list. Based on the obtained available cell list, an accurate and reliable cell change within cellular and non-terrestrial networks can be performed by the terminal device, thereby improving the stability and the continuity of the terminal device's network communication, and ensuring the service stability, the service continuity, and the service quality in various mobile scenarios.

The second handover strategy of the present application will be described in detail below with specific embodiments. The following specific embodiments can be combined with each other, and for the same or similar concepts or processes, they may not be repeated in some embodiments. The embodiments of the present application will be described below with reference to the accompanying drawings.

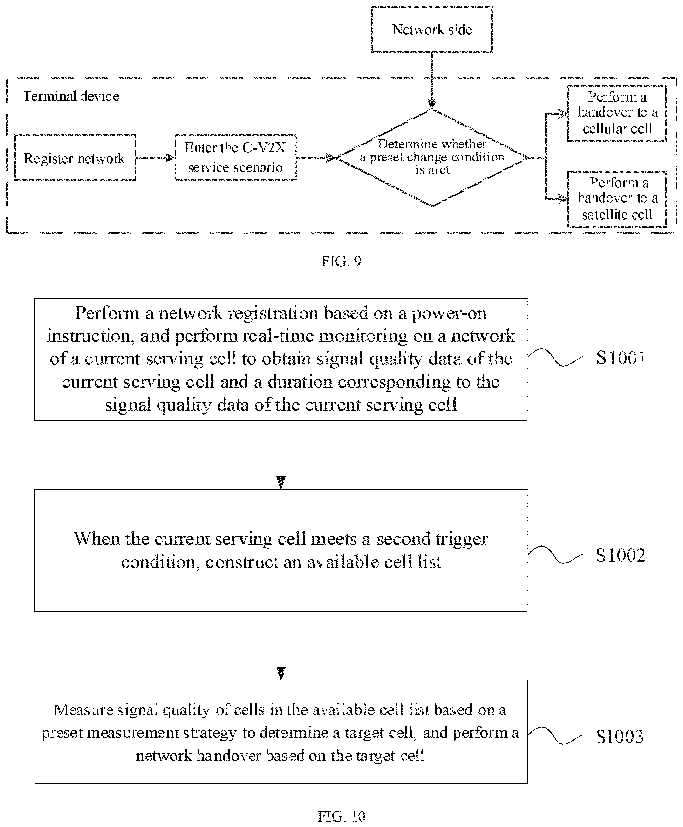

A specific application scenario of the second handover strategy includes a network side and a terminal side. The terminal side includes multiple terminal devices. For any terminal device, FIG. 9 is a schematic diagram of an application scenario of a network handover method provided by the present application. As shown in FIG. 9, the terminal device registers with a network of a current serving cell after power-on and, when entering the C-V2X service scenario, determines, based on data provided by the network side, whether the network of the current serving cell meets a preset change condition (i.e., a second trigger condition). When the preset change condition is met, the mobile communication network is switched from the current serving cell to a new cell, such as a cellular cell or a satellite cell. The aforementioned terminal device can be a terrestrial mobile terminal or an aerial mobile terminal, which is not limited in the present application.

FIG. 10 is a fifth flowchart of a network handover method provided by the present application. As shown in FIG. 10, the method includes the following.

S1001, perform a network registration based on a power-on instruction, and perform real-time monitoring on a network of a current serving cell to obtain signal quality data of the current serving cell and a duration corresponding to the signal quality data of the current serving cell.

In a possible embodiment, the terminal device performs the network registration after power-on, and connects to a cellular network or a non-terrestrial network. When entering a service scenario (e.g., C-V2X service scenario), the terminal device monitors a signal quality of the current serving cell in real time to obtain the signal quality data of the current serving cell (e.g., first signal quality data) and the duration corresponding to the signal quality data of the current serving cell (e.g., the duration during which the current serving cell is served with the first signal quality data). Exemplarily, the signal quality data of the current serving cell includes RSRP data, RSRQ data, SINR data, and RSSI data.

Optionally, a master switch is introduced for the network handover method of the present application. A control strategy corresponding to the master switch can be adjusted via a control panel or by code-level macro definitions. In this embodiment, the control strategy of the master switch defaults to an ON state. For example, the terminal device, based on the power-on instruction, loads the control strategy corresponding to the master switch A during the power-on process, and starts a network handover process of this solution based on the control strategy of the default ON state.

S1002, when the current serving cell meets a second trigger condition, construct an available cell list.

More specifically, it is determined whether the current serving cell meets the second trigger condition. When it is determined that the current serving cell meets the second trigger condition, the available cell list is constructed. The second trigger condition refers to that the signal quality data is lower than a first preset threshold and the duration of the signal quality data being lower than the first preset threshold exceeds a first preset time.

Optionally, after obtaining the RSRP data, the RSRQ data, the SINR data, and the RSSI data of the current serving cell, it is determined whether the current serving cell meets the preset change condition. That is, it is determined whether the RSRP data, the RSRQ data, the SINR data, and the RSSI data of the current serving cell are lower than a first preset threshold Threshold1, and whether the duration of the signal quality data being lower than the first preset threshold exceeds the first preset time.

Optionally, the first preset threshold Threshold1 includes poor threshold markers corresponding to RSRP, RSRQ, SINR, and RSSI respectively. The first preset threshold is obtained by configuring threshold markers corresponding to RSRP, RSRQ, SINR, and RSSI parameters when a network signal quality of a cell is poor.

Optionally, developers tune and set the first preset threshold based on a cell density, a coverage area, the number of cells, a cell priority (including an RAT priority), and an actual network measurement result of each area, so as to avoid power consumption and Ping-Pong handover issues caused by an overly high or low first preset threshold. The threshold markers of the first preset threshold are adjusted and configured via the control panel.

Exemplarily, since the service continuity is affected when the RSRP data is below -120dBm in the 4G network or below -130dBm in the 5G network, a threshold marker for the RSRP parameter in the first preset threshold Threshold1 of the current serving cell is set to -118dBm (4G) and -128dBm (5G). The method for determining the threshold markers for the RSRQ, SINR, and RSSI parameters in the first preset threshold is similar to that for the RSRP parameter in the first preset threshold, which is not elaborated in this embodiment. The setting of the first preset threshold Threshold1 can be a single indicator (RSRP) or a combined indicator [RSRP &&∥ RSRQ &&∥ SINR &&∥ RSSI].

Optionally, in this embodiment, a timer Time1 is used to determine a duration during which the signal quality data of the current serving cell is lower than a threshold marker of a corresponding parameter in the first preset threshold Threshold1.

Optionally, the terminal device constructs a database cell table and updates the database cell table in real time.

Optionally, constructing and updating the database cell table include: acquiring preset configuration information, and generating a database cell table according to the preset configuration information, where the preset configuration information includes historical registered cell information, cellular operation network information, and non-terrestrial operation network information; based on the registered network, receiving system information of the current serving cell delivered by the network side in real time to obtain serving cell information and neighbor cell information at a current moment; and updating the database cell table according to the serving cell information and the neighbor cell information.

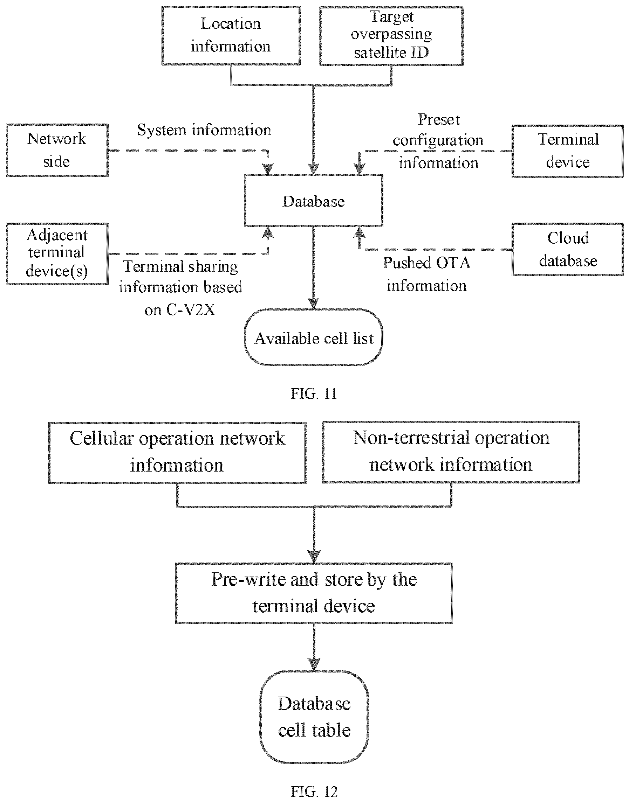

In a possible embodiment, as shown in FIG. 11, the terminal device writes the preset configuration information into a database. More specifically, as shown in FIG. 12, the terminal device obtains the preset configuration information based on the cellular operation network information (i.e., cellular network information) and the non-terrestrial operation network information (i.e., non-terrestrial network information) delivered in real time by the network side, pre-writes and saves the preset configuration information into the database, so as to obtain the database cell table. In the present application, a manner for storing the preset configured cellular operation network information and the preset configured non-terrestrial operation network information into the terminal device includes but is not limited to a database storage, an XML storage, and other storage manners, so as to adapt to resource limitations of different devices.

In a possible embodiment, the terminal device writes and saves the historical registered cell information, the cellular operation network information, and the non-terrestrial operation network information into the database, so as to obtain the constructed database cell table.

Exemplarily, in this embodiment, a cell belonging to the non-terrestrial network in the database cell table is marked as a satellite ID (or a corresponding TA area), and a cell belonging to the cellular network in the database cell table is marked as a PLMN (public land mobile network) identifier (or a corresponding TA area). The present application has no limitation on an identification field corresponding to each cell in the database cell table. Here, TA (Tracking Area) refers to a location area of LTE packet switched domain.

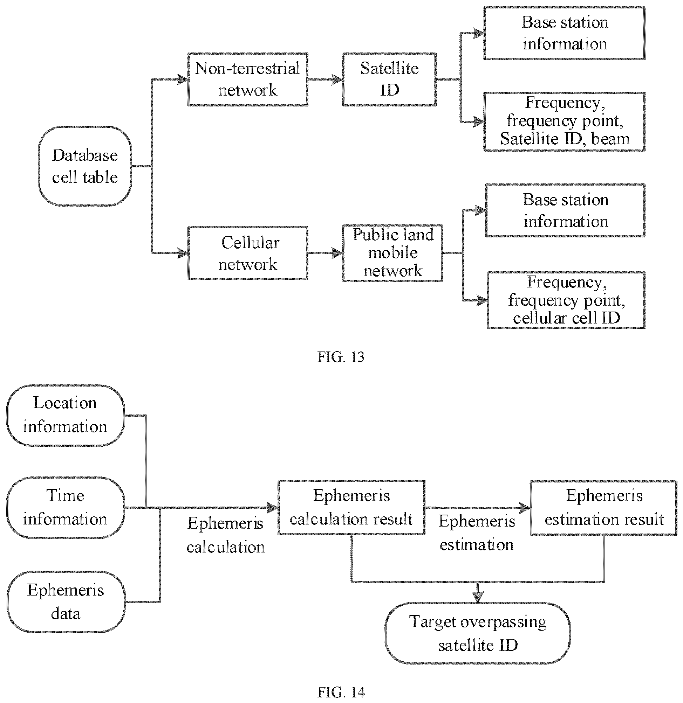

Exemplarily, FIG. 13 is a structural diagram of a database cell table provided by the present application. As shown in FIG. 13, the database cell table includes fields corresponding to the non-terrestrial network and the cellular network respectively. Among the fields for the non-terrestrial network, there is an identification field for a satellite ID, and the corresponding satellite cell information is determined based on the identification field for this satellite ID. At the same time, among the fields for the cellular network, there is an identification field for the public land mobile network, and the corresponding cellular cell information is determined based on the identification field of this public land mobile network. The satellite cell information includes but is not limited to a cell ID, a frequency point, base station information, a beam, a satellite ID, a satellite overpass time. The cellular cell information includes but is not limited to a cell ID, a frequency point, base station information.

In a possible embodiment, as shown in FIG. 11, after registering with the network, the terminal device receives a system message of the current serving cell delivered by the network side, obtains the latest serving cell information and the latest neighbor cell information at the current moment based on this system message, and updates the database cell table in the database with the latest serving cell information and the latest neighbor cell information.

Optionally, after generating the database cell table, the method further includes: if an instruction to enter the C-V2X service scenario is received, then terminal sharing information within a preset range is acquired based on the current location information. The terminal sharing information includes cell information shared by multiple adjacent terminal devices within the preset range. The database cell table is updated according to the terminal sharing information.

Exemplarily, as shown in FIG. 11, when receiving the instruction to enter the C-V2X service scenario, the terminal sharing information transmitted by multiple adjacent terminal devices within the preset range is acquired based on the current location information, and the database cell table in the database is updated with the terminal sharing information. The multiple adjacent terminal devices are terminal devices that support registration with the cellular network and the non-terrestrial network and have entered the C-V2X service scenario. The preset range is determined according to a communication distance and a communication quantity specified by the 3GPP protocol.

Optionally, after generating the database cell table, the method further includes: if OTA information pushed by a cloud database is received, then updating the database cell table based on the OTA information.

Exemplarily, as shown in FIG. 11, when receiving the OTA information pushed by the cloud database, the cell information that needs to be updated in the database cell table is determined and updated based on this OTA information.

Optionally, an available cell list is determined based on the updated database cell table. The number of available cell lists is configured by a developer according to an actual situation.

In this embodiment, the database cell table is generated and saved according to the preset configuration information, and is updated according to the system information delivered in real time by the network side and the terminal sharing information, so as to ensure the authenticity and the accuracy of the database cell table. The stored cell information is timely updated based on the information pushed by cloud data, further improving the comprehensiveness and the reliability of each cell information in the database of the terminal device.

Optionally, constructing the available cell list specifically includes: acquiring current location information, determining a public land mobile network identifier corresponding to the location information based on a database cell table that is updated in real time, determining corresponding available cellular cell information based on the public land mobile network identifier, where the database cell table is constructed and updated by the terminal device; determining a target overpassing satellite ID based on the location information, determining satellite cell information corresponding to the target overpassing satellite ID based on the database cell table to obtain available satellite cell information; and generating the available cell list according to the available cellular cell information and the available satellite cell information.

Optionally, before generating the available cell list, the method further includes: if real-time system information is received, then generating the available cell list according to the system information, the available cellular cell information, and the available satellite cell information.

In a possible embodiment, after the terminal device determines the available cellular cell information and the available satellite cell information based on the current database cell table, if the terminal device receives the system information delivered in real time by the network side, it generates the available cell list according to the system information, the available cellular cell information, and the available satellite cell information. In this embodiment, the available cell list is generated preferentially based on the valid system information when the database cell table is not updated in time, thereby improving the reliability and the accuracy of the available cell list.

Optionally, determining the target overpassing satellite ID based on the location information specifically includes: acquiring current time information and current ephemeris data; performing an ephemeris calculation on the location information, the time information, and the ephemeris data to obtain an ephemeris calculation result, and storing the ephemeris calculation result, where the location information includes altitude information, longitude information and latitude information, and the ephemeris calculation result includes a satellite ID and running trajectory data corresponding to each satellite; performing an ephemeris estimation on the ephemeris calculation result to obtain an ephemeris estimation result, and storing the ephemeris estimation result, where the ephemeris estimation result includes a satellite ID, an arrival time, and a departure time corresponding to each satellite; determining a surrounding satellite ID corresponding to the location information according to the running trajectory data corresponding to each satellite in the ephemeris calculation result; obtaining an arrival time and a departure time corresponding to the surrounding satellite ID based on the ephemeris estimation result, and determining the target overpassing satellite ID corresponding to the terminal device.

Exemplarily, the running trajectory data includes longitude information, latitude information, azimuth angle information, pitch angle information, time information, and orbit information during a real-time operation. The location information includes current longitude information, current latitude information, and current altitude information.

In a possible embodiment, FIG. 14 is a flowchart of calculating the target overpassing satellite ID provided by the present application. As shown in FIG. 14, current location information, current time information, and current ephemeris data of the terminal device are acquired, and the obtained ephemeris data is stored in an ephemeris data table of a database. Ephemeris calculation processing is performed on the location information, the time information, and the ephemeris data stored in the ephemeris data table through an ephemeris calculation algorithm to obtain an ephemeris calculation result, that is, a satellite ID and running trajectory data of each satellite. The ephemeris calculation result is stored in an ephemeris calculation table of the database. The ephemeris calculation algorithm in this embodiment is an open-source algorithm or an open-source model. By inputting the current time information, the current location information, and the current ephemeris data into a corresponding model, the ephemeris calculation result is obtained. The principle and technical effect of the ephemeris calculation in this embodiment are similar to those of the prior art and will not be repeated here.

In a possible embodiment, as shown in FIG. 14, after obtaining the ephemeris calculation result, ephemeris estimation processing is performed on data in the ephemeris calculation table through an ephemeris estimation algorithm, so as to obtain an ephemeris estimation result, that is, a satellite ID corresponding to each satellite, a corresponding arrival time at the terminal and a corresponding departure time from the terminal device for each satellite. The ephemeris estimation result is stored in an ephemeris estimation table of the database. The ephemeris estimation algorithm in this embodiment is recorded in the published technology and will not be repeated here.

In a possible embodiment, as shown in FIG. 14, a surrounding satellite ID around the current location of the terminal device is determined according to the satellite ID and the running trajectory data of each satellite in the ephemeris calculation table. An arrival time at the terminal device and a departure time from the terminal device for the surrounding satellite ID are determined according to the ephemeris estimation result in the ephemeris estimation table, and an overpass duration of the surrounding satellite ID is obtained. A fastest-overpass satellite ID for the terminal device is determined based on the arrival time and the overpass duration, and the target overpassing satellite ID corresponding to the terminal device is obtained.

Exemplarily, a manner for the terminal device to acquire the current location information includes but is not limited to: acquiring the current location information through a positioning satellite of a global navigation satellite system (GNSS) module in the terminal device, a non-terrestrial network base station and a map application software in the terminal device's operating system. The manner for the terminal device to acquire the current time information includes but is not limited to: acquiring the current time information through a cellular base station, a non-terrestrial network base station, or a mobile network on the network side. The manner for the terminal device to acquire the current ephemeris data includes but is not limited to: obtaining the current ephemeris data delivered by the network side through the non-terrestrial network or the mobile network.

In this embodiment, the ephemeris calculation processing and the ephemeris estimation processing are performed based on the current location information, the current time information, and the current ephemeris data by the terminal device, so as to obtain the target overpassing satellite ID with the fastest overpass. This solves a low-accuracy problem in the data used by the network side to generate the handover instruction, thereby further enhancing the service stability, the service continuity, and the service quality in various mobile scenarios.

In a possible embodiment, based on the structure of the database cell table shown in FIG. 13, after obtaining the database cell table, the current location information of the terminal device and the target overpassing satellite ID of the terminal device, a corresponding target identification field for public land mobile network is queried among the field(s) for cellular network in the database cell table according to the location information, and a corresponding cellular cell is determined based on the target identification field for public land mobile network to obtain available cellular cell information. At the same time, a corresponding target identification field for satellite ID is queried among the field(s) for non-terrestrial network (e.g., 5G non-terrestrial network) in the database cell table according to the target overpassing satellite ID, and a corresponding satellite cell is determined based on the target identification field for satellite ID to obtain available satellite cell information. The available cell list is generated according to the available satellite cell information and the available cellular cell information. In this embodiment, the corresponding cell is queried by the terminal device in the real-time updated database cell table based on the current location information and the target overpassing satellite ID, so as to generate the available cell list that includes both cellular cell(s) and satellite cell(s). This available cell list provides a basis for the cell change, thereby achieving fast and smooth switching within cellular and non-terrestrial networks, thus the network continuity and the transmission stability of the terminal device are improved.

Optionally, after generating the database cell table, the method further includes: updating the non-terrestrial operation network information in the database cell table according to the ephemeris calculation result and the ephemeris estimation result.

Exemplarily, the satellite cell information (e.g., the satellite ID, a range of beam coverage, an effective service time window, etc.) in the database is dynamically updated through the ephemeris calculation result and the ephemeris estimation result.

Optionally, after the database cell table is updated, the available cell list is synchronously updated based on the updated database cell table.

In this embodiment, the satellite cell information in the database is dynamically updated, and key parameters in the database, such as the satellite overpass time, the signal strength and the like are corrected in real time. This avoids relying on static or lagging satellite parameters, reduces a failure rate of signal switching of the terminal device, and improves the network continuity and the transmission stability of the terminal device.

S1003, measure signal quality of cells in the available cell list based on a preset measurement strategy to determine a target cell, and perform a network handover based on the target cell.

More specifically, based on the preset measurement strategy, the signal quality of the cell(s) in the available cell list is measured to determine the target cell; and the network handover is performed based on the target cell. When the target cell is a cellular cell, the network is switched to a cellular network corresponding to the cellular cell, and when the target cell is a satellite cell, the network is switched to a non-terrestrial network corresponding to the satellite cell.

Optionally, the preset measurement strategy includes but is not limited to: a sequential measurement strategy and a full measurement strategy.

Optionally, if the preset measurement strategy is the sequential measurement strategy, a polling measurement is performed on the cells in the available cell list. Signal quality data of a cell and a duration corresponding to the signal quality data of that cell are obtained for each measurement, and it is determined whether the signal quality of the cell meets a preset communication condition. The preset communication condition refers to that the network signal quality data is higher than a second preset threshold and a duration during which the network signal quality data is higher than the second preset threshold exceeds a second preset time. A first cell whose signal quality meets the preset communication condition obtained through the polling measurement is determined as the target cell. If no cell in the available cell list has a signal quality that meets the preset communication condition through the polling measurement, the process continues by monitoring the signal quality of the current serving cell.

Optionally, if the preset measurement strategy is the full measurement strategy, a signal quality of each cell in the available cell list is measured to obtain signal quality data and a duration corresponding to each cell in the available cell list. It is determined whether the signal quality of a corresponding cell meets the preset communication condition according to the signal quality data and the duration of each cell. The cell(s) that meet the preset communication condition are sorted to obtain a sorting result, and the target cell is determined according to the sorting result.

Optionally, the preset measurement strategy can be determined by the user of the terminal device, or developers can configure corresponding measurement strategies for different scenarios, so that the user can choose a corresponding measurement strategy in a target scenario. For example, for a scenario with a high network requirement, the full measurement strategy is selected as the preset measurement strategy. For a scenario of emergency communication, the sequential measurement strategy is selected as the preset measurement strategy.

Optionally, after obtaining the target cell, the terminal device performs a cell change operation based on the target cell. The cell change operation includes but is not limited to a handover, a reselection, a redirection, an active network search, and a background network search.

In this embodiment, the sequential measurement strategy is adopted in the scenario of emergency communication, so as to perform the cell change corresponding to the cell immediately when the first cell that meets the preset communication condition is obtained based on the available cell list. In the scenario with the high network requirement, the full measurement strategy is adopted, so as to select the optimal cell for the cell change after obtaining the signal quality of each cell in the current available cell list. Thus, fast and smooth network switching is achieved across different scenarios, and the network continuity, the network stability, and the network reliability are improved.

Optionally, the second preset threshold Threshold2 includes good threshold markers corresponding to RSRP, RSRQ, SINR, and RSSI parameters, respectively. The second preset threshold is obtained by configuring threshold markers corresponding to RSRP, RSRQ, SINR, and RSSI parameters when a network signal quality of a cell is good.

Exemplarily, since the service continuity is not affected when RSRP data is above -90dBm in the 4G network or above -100dBm in the 5G network, a threshold marker for the RSRP parameter in the second preset threshold Threshold2 corresponding to the current serving cell is set to -90dBm (4G) and -100dBm (5G). The method for determining the threshold markers for the RSRQ, SINR, and RSSI parameters in the second preset threshold is similar to that for the RSRP parameter in the second preset threshold, which is not elaborated in this embodiment. The setting of the second preset threshold Threshold2 can be a single indicator (RSRP) or a combined indicator [RSRP &&∥ RSRQ &&∥ SINR &&∥ RSSI].

Optionally, in this embodiment, a timer Time2 is used to determine a duration during which the signal quality data of the target cell is higher than a threshold marker of a corresponding parameter in the second preset threshold Threshold2.

Optionally, the configurations of the threshold markers respectively corresponding to the first preset threshold Threshold1, the second preset threshold Threshold2, the timer Time1, and the timer Time2 in the embodiments of the present application need to be adjusted and configured according to the network environment of the current cell. The configuration items of the above parameters vary in different areas and markets, and developers adjust and set the above parameters according to the specific network environment. The above parameters can be saved in a single configuration item or in multiple configuration items. In this embodiment, the above parameters are adjusted and configured via the control panel.

According to the second handover strategy provided by the embodiments of the present application, the terminal device constructs the available cell list when determining that the signal quality data of the current serving cell is lower than the first preset threshold and the duration of the signal quality data being lower than the first preset threshold exceeds the first preset time. The signal quality of cell(s) in the available cell list is measured based on the preset measurement strategy, and the target cell is determined based on a measurement result. Thus, when the target cell is a cellular cell, the current network is switched to a cellular network corresponding to the cellular cell. When the target cell is a satellite cell, the current network is switched to a non-terrestrial network corresponding to the satellite cell. This achieves fast and smooth switching of the terminal device within cellular and non-terrestrial networks, improves the stability and the continuity of the terminal device's network communication, and reduces the impact of the cell change process on user experience.

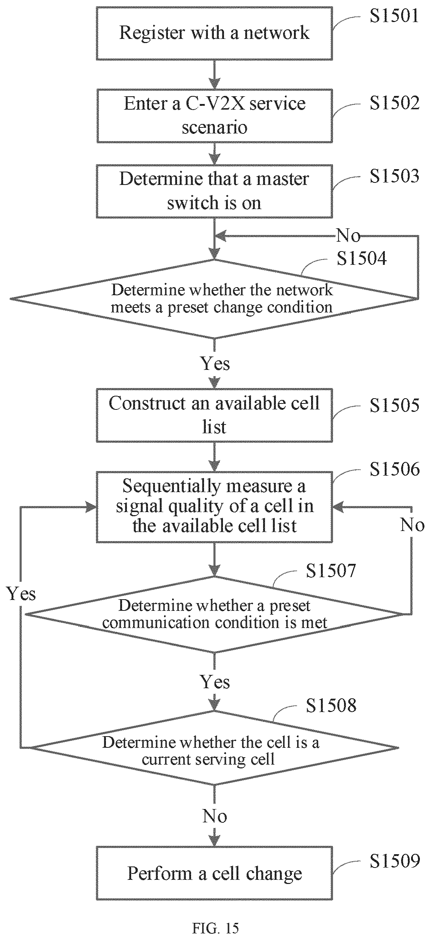

FIG. 15 is a sixth flowchart of the network handover method provided by the present application. As shown in FIG. 15, based on the embodiment of FIG. 10, this embodiment provides a detailed description of a network handover method when a preset measurement strategy is a sequential measurement strategy. The method includes the following.

S1501, register with a network.

More specifically, a terminal device registers with a network of a current serving cell after power-on.

S1502, enter a C-V2X service scenario.

More specifically, the terminal device enters the C-V2X service scenario based on an instruction to enter the C-V2X service scenario.

S1503, determine that a master switch is on.

More specifically, the terminal device determines that the control master switch corresponding to this solution is in an ON state. A state of the master switch defaults to the ON state.

S1504, determine whether the network meets a preset change condition.

More specifically, the network of the current serving cell is monitored in real time to obtain signal quality data and a duration of the network of the current serving cell. It is determined that the network meets the preset change condition when the signal quality data is lower than a first preset threshold and the duration exceeds a first preset time; otherwise, it is determined that the network does not meet the preset change condition.

Optionally, when it is determined that the preset change condition is met, execute step S1505.

Optionally, when it is determined that the preset change condition is not met, execute step S1504. The process continues by monitoring the network in real time.

S1505, when the preset change condition is met, construct an available cell list.

More specifically, when it is determined that the preset change condition is met, current location information, current time information, and current ephemeris data are acquired and processed through an ephemeris calculation algorithm to obtain a satellite ID and running trajectory data corresponding to each satellite. Ephemeris estimation processing is performed on each satellite through an ephemeris estimation algorithm to obtain a satellite ID, an arrival time at the terminal device, and a departure time from the terminal device for each satellite. An overpass duration of each satellite is determined based on the arrival time at the terminal device and the departure time from the terminal device for each satellite. A target overpassing satellite ID that will reach the terminal device earliest is determined based on the current location information of the terminal device, the arrival time at the terminal device for each satellite and the overpass duration of each satellite. The corresponding available satellite cell information is queried in the database cell table according to the target overpassing satellite ID, and the corresponding available cellular cell information is queried in the database cell table according to the location information, thereby obtaining the available cell list.

S1506, sequentially measure a signal quality of a cell in the available cell list.

More specifically, based on the sequential measurement strategy, a polling measurement is performed on signal quality of cell(s) in the available cell list. For example, a signal quality of a first cell in the available cell list is measured, and after obtaining signal quality data and a duration corresponding to the first cell, step S1507 is executed.

S1507, determine whether the cell meets a preset communication condition.

More specifically, based on the signal quality of the first cell obtained in step S1506, when it is determined that the signal quality data of the first cell is higher than a second preset threshold and the duration exceeds a second preset time, it is determined that the cell meets the preset communication condition and step S1508 is executed. Otherwise, it is determined that the cell does not meet the preset communication condition, and at this time step S1506 is executed, in which the polling measurement is performed to measure a signal quality of a next cell (a second cell) in the available cell list, until a cell that meets the preset communication condition is obtained.

Optionally, if no cell that meets the preset communication condition is obtained after polling the entire available cell list, the process continues by monitoring the network of the current serving cell.

S1508, when the cell meets the preset communication condition, determine whether the cell is the current serving cell.

More specifically, when it is determined in step S1507 that the first cell meets the preset communication condition, it is determined whether the first cell is the current serving cell.

S1509, when it is not the current registered cell, perform a cell change.

More specifically, when it is determined that it is not the current serving cell, the cell change is performed according to cell information corresponding to the first cell.

Optionally, if the current serving cell is cellular cell 1 and the first cell is cellular cell 2, a change between different cellular cells is performed.

Optionally, if the current serving cell is cellular cell 1 and the first cell is satellite cell 1, a change between a cellular cell and a satellite cell is performed.

Optionally, if the current serving cell is satellite cell 1 and the first cell is satellite cell 2, a change between different satellite cells is performed.

In the network handover method provided by the embodiment of the present application, based on the sequential measurement strategy, the measurement stops when a cell that meets the preset communication condition is obtained by polling the available cell list, and the cell change is performed according to that cell. This meets the cell change requirement in the scenario of emergency communication, improves a cell change rate, and enhances the service continuity and the service stability.

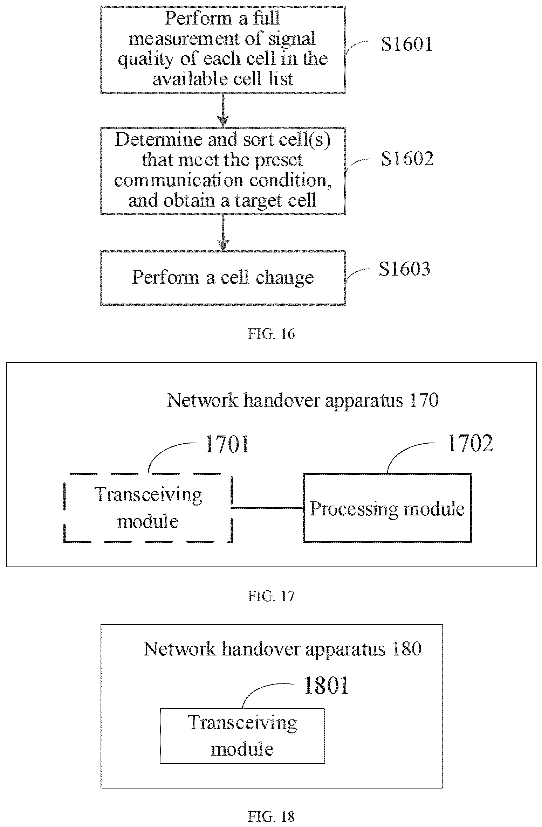

FIG. 16 is a seventh flowchart of the network handover method provided by the present application. As shown in FIG. 16, based on the embodiment of FIG. 15, this embodiment provides a detailed description of a network handover method after constructing the available cell list based on a full measurement strategy. The method includes the following.

S1601, perform a full measurement of signal quality of each cell in the available cell list.

More specifically, after constructing the available cell list, the terminal device performs a full measurement of the signal quality of each cell in the available cell list based on the full measurement strategy, thereby obtaining signal quality data and a duration corresponding to each cell in the available cell list.

S1602, determine and sort cell(s) that meet the preset communication condition, and obtain a target cell.

More specifically, it is determined whether a respective cell meets the preset communication condition. Multiple cells whose signal quality data are higher than a second preset threshold and whose durations exceed a second preset time are sorted. A cell ranked first is taken as the target cell.

Optionally, after obtaining the multiple cells whose signal quality data are higher than the second preset threshold and whose durations exceed the second preset time, the multiple cells are sorted according to their signal quality data and the durations of the cells.

S1603, perform a cell change.

More specifically, when it is determined that the target cell is not the current serving cell of the terminal device, the current serving cell is handed over to the target cell.

In the network handover method provided by the embodiment of the present application, based on the full measurement strategy, one or more cells that meet the preset communication condition are obtained after a full measurement of the available cell list. These cells are sorted to obtain a cell with the optimal network, and then the cell change is performed based on this cell. This meets the cell change requirement in the scenarios with high network requirements and enhances user experience.

It should be noted that, the above describes the second handover strategy using a cell handover as an example. In some cases, the second handover strategy is also applicable to a beam handover.

FIG. 17 is a first structural diagram of a network handover apparatus provided by an embodiment of the present application. As shown in FIG. 17, the network handover apparatus 170 provided in this embodiment includes a processing module 1702. The processing module 1702 is configured to: in response to a first trigger condition, perform a first network handover based on a first handover strategy, where the first handover strategy is a strategy for performing the first network handover through an artificial intelligence (AI) model at least based on feature data of the terminal; in response to a second trigger condition, perform a second network handover based on a second handover strategy, where the second handover strategy is a strategy for performing the second network handover based on a measurement result of each available cell for the terminal; where the first trigger condition and the second trigger condition are pre-configured trigger conditions, and the first trigger condition is different from the second trigger condition.

In a possible implementation, the network handover apparatus 170 further includes a transceiving module 1701, configured to receive network quality parameter(s) corresponding to at least one cell or at least one beam of each PLMN among at least one PLMN. The processing module 1702 is further configured to process, through the artificial intelligence (AI) model, identification information of the at least one cell or the at least one beam of each PLMN and the network quality parameter(s) corresponding to the at least one cell or the at least one beam of each PLMN, to obtain first identification information, where the first identification information is identification information of one of the at least one cell or the at least one beam of each PLMN. The processing module 1702 is further configured to perform a cell handover or a beam handover when a cell or a beam indicated by the first identification information is different from a serving cell or a serving beam of the terminal.

In a possible implementation, the processing module 1702 is specifically configured to: input the network quality parameter(s) and the identification information of the at least one cell or the at least one beam of each PLMN into the AI model to obtain quality score(s) corresponding to the identification information of the at least one cell or the at least one beam of each PLMN, and determine identification information corresponding to a maximum quality score among the quality score(s) as the first identification information; or, for each cell or each beam among the at least one cell or the at least one beam of each PLMN, determine a state corresponding to the cell or the beam according to the network quality parameter(s) corresponding to the cell or the beam, and process the state(s) of the at least one cell or the at least one beam of each PLMN through the AI model to obtain the first identification information, where the AI model includes a reinforcement learning model, the first identification information is an action corresponding to a maximum Q value in a Q table of the reinforcement learning model, and the action corresponding to the maximum Q value represents identification information corresponding to the maximum Q value; where the Q table includes multiple actions, multiple states, and a Q value corresponding to each pair of action and state.

In a possible implementation, the processing module 1702 is further configured to: acquire a new state corresponding to the cell or the beam indicated by the first identification information, determine a reward according to the new state, and determine a new Q value according to the new state and the reward, so that the Q table is updated based on the new Q value.

In a possible implementation, the processing module 1702 is specifically configured to: process, through a first sub-model in the AI model, the identification information of the at least one cell or the at least one beam of each PLMN and the network quality parameter(s) corresponding to the at least one cell or the at least one beam of each PLMN, to obtain quality score(s) of the at least one cell or the at least one beam of each PLMN; process, through a second sub-model in the AI model, the network quality parameter(s) corresponding to the at least one cell or the at least one beam of each PLMN and the quality score(s) of the at least one cell or the at least one beam of each PLMN, to obtain the first identification information.

In a possible implementation, the first sub-model includes a supervised learning model, and the second sub-model includes a reinforcement learning mode. The processing module 1702 is specifically configured to: obtain the quality score(s) of the at least one cell or the at least one beam of each PLMN through the supervised learning model; for each cell or each beam among the at least one cell or the at least one beam of each PLMN, determine a state corresponding to the cell or the beam according to the network quality parameter(s) corresponding to the cell or the beam; process, through the reinforcement learning model, the state(s) and the quality score(s) of the at least one cell or the at least one beam of each PLMN, to obtain the first identification information.

In a possible implementation, the processing module 1702 is further configured to: acquire a network performance parameter corresponding to the cell or the beam indicated by the first identification information, and obtain a reward for the reinforcement learning model according to the network performance parameter and a quality score corresponding to the first identification information; adjust an identification selection probability of the reinforcement learning model according to the quality score corresponding to the first identification information, such that the reinforcement learning model is updated according to the reward and/or the adjusted identification selection probability, and updated identification information is obtained based on the updated reinforcement learning model.

In a possible implementation, the processing module 1702 is specifically configured to: acquire signal quality parameter(s) corresponding to the at least one cell or the beam of each PLMN; process, through the AI model, identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN to obtain the first identification information.

In a possible implementation, the processing module 1702 is specifically configured to: input the network quality parameter(s), the signal quality parameter(s), and the identification information of the at least one cell or the at least one beam of each PLMN into the AI model to obtain quality score(s) corresponding to the identification information of the at least one cell or the at least one beam of each PLMN, and determine identification information corresponding to a maximum quality score among the quality score(s) as the first identification information; or, for each cell or each beam among the at least one cell or the at least one beam of each PLMN, determine a state corresponding to the cell or the beam according to the signal quality parameter(s) and network quality parameter(s) corresponding to the cell or the beam, and process the state(s) of the at least one cell or the at least one beam of each PLMN through the AI model to obtain the first identification information, where the AI model includes a reinforcement learning model, the first identification information is an action corresponding to a maximum Q value in a Q table of the reinforcement learning model, and the action corresponding to the maximum Q value represents identification information corresponding to the maximum Q value; where the Q table includes multiple actions, multiple states, and a Q value corresponding to each pair of action and state.

In a possible implementation, the processing module 1702 is specifically configured to: process, through a first sub-model in the AI model, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN, to obtain quality score(s) of the at least one cell or the at least one beam of each PLMN; process, through a second sub-model in the AI model, the signal quality parameter(s) corresponding to the at least one cell or the at least one beam of each PLMN, the network quality parameter(s) corresponding to the at least one cell or the at least one beam of each PLMN, and the quality score(s) of the at least one cell or beam of each PLMN, to obtain the first identification information.

In a possible implementation, the first sub-model includes a supervised learning model, and the second sub-model includes a reinforcement learning model. The processing module 1702 is specifically configured to: obtain the quality score(s) of the at least one cell or the at least one beam of each PLMN through the supervised learning model; for each cell or each beam among the at least one cell or the at least one beam of each PLMN, determine a state corresponding to the cell or the beam according to the network quality parameter(s) and the signal quality parameter(s) corresponding to the cell or the beam; process, through the reinforcement learning model, the state(s) and the quality score(s) of the at least one cell or the at least one beam of each PLMN, to obtain the first identification information.

In a possible implementation, the processing module 1702 is specifically configured to: acquire travel information of the terminal; process, through the AI model, the travel information of the terminal, identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN to obtain the first identification information.

In a possible implementation, the processing module 1702 is specifically configured to: input the network quality parameter(s), the signal quality parameter(s), the travel information of the terminal, and the identification information of the at least one cell or the at least one beam of each PLMN into the AI model to obtain quality score(s) corresponding to the identification information of the at least one cell or the at least one beam of each PLMN, and determine identification information corresponding to a maximum quality score among the quality score(s) as the first identification information; or, for each cell or each beam among the at least one cell or the at least one beam of each PLMN, determine a state corresponding to the cell or the beam according to the signal quality parameter(s) and the network quality parameter(s) corresponding to the cell or the beam, and the travel information of the terminal, and process the state(s) of the at least one cell or the at least one beam of each PLMN through the AI model to obtain the first identification information, where the AI model includes a reinforcement learning model, the first identification information is an action corresponding to a maximum Q value in a Q table of the reinforcement learning model, and the action corresponding to the maximum Q value represents identification information corresponding to the maximum Q value; where the Q table includes multiple actions, multiple states, and a Q value corresponding to each pair of action and state.

In a possible implementation, the processing module 1702 is specifically configured to: process, through a first sub-model in the AI model, the travel information of the terminal, the identification information of the at least one cell or the at least one beam of each PLMN, the signal quality parameter(s) corresponding to the at least one cell or the at least one beam of each PLMN, and the network quality parameter(s) corresponding to the at least one cell or the at least one beam of each PLMN, to obtain quality score(s) of the at least one cell or the at least one beam of each PLMN; process, through a second sub-model in the AI model, the travel information of the terminal, the signal quality parameter(s) corresponding to the at least one cell or the at least one beam of each PLMN, the network quality parameter(s) corresponding to the at least one cell or the at least one beam of each PLMN, and the quality score(s) of the at least one cell or the at least one beam of each PLMN, to obtain the first identification information.

In a possible implementation, the first sub-model includes a supervised learning model, and the second sub-model includes a reinforcement learning model. The processing module 1702 is specifically configured to: obtain the quality score(s) of the at least one cell or the at least one beam of each PLMN through the supervised learning model; for each cell or each beam among the at least one cell or the at least one beam of each PLMN, determine a state corresponding to the cell or the beam according to the network quality parameter(s) and the signal quality parameter(s) corresponding to the cell or the beam, and the travel information of the terminal; process, through the reinforcement learning model, the state(s) and the quality score(s) of the at least one cell or the at least one beam of each PLMN, to obtain the first identification information.

In a possible implementation, the travel information of the terminal is travel information of the terminal within a preset future duration; the signal quality parameter(s) corresponding to the at least one cell or the at least one beam of each PLMN are signal quality parameter(s) corresponding to the at least one cell or the at least one beam of each PLMN within the preset future duration; the network quality parameter(s) corresponding to the at least one cell or the at least one beam of each PLMN are network quality parameter(s) corresponding to the at least one cell or the at least one beam of each PLMN within the preset future duration.

In a possible implementation, the processing module 1702 is specifically configured to: perform a handover from the serving cell to the cell indicated by the first identification information, where a PLMN to which the serving cell belongs is the same as a PLMN to which the cell indicated by the first identification information belongs, or a PLMN to which the serving cell belongs is different from a PLMN to which the cell indicated by the first identification information belongs. The processing module 1702 is specifically configured to: perform a handover from the serving beam to the beam indicated by the first identification information, where a PLMN to which the serving beam belongs is the same as a PLMN to which the beam indicated by the first identification information belongs, or a PLMN to which the serving beam belongs is different from a PLMN to which the beam indicated by the first identification information belongs.

In a possible implementation, the at least one PLMN is a PLMN that the terminal has accessed.

In a possible implementation, the transceiving module 1701 is further configured to: transmit request information to a network device corresponding to the at least one cell or the at least one beam of each PLMN, where the request information is used to request to acquire the network quality parameter(s) corresponding to the cell or the beam.

In a possible implementation, the network quality parameter(s) corresponding to the cell or the beam include one or more of the following:
a network performance parameter corresponding to the cell or the beam;
a quality of service parameter corresponding to the cell or the beam; or,
a network state parameter corresponding to the cell or the beam.

In a possible implementation, the network performance parameter includes one or more of the following: a bandwidth, a delay, a jitter, a packet loss rate, a throughput, or a bit error rate.

In a possible implementation, the quality of service parameter includes one or more of the following: a bandwidth guarantee, a maximum delay, a maximum jitter, a maximum packet loss rate, or a priority.

In a possible implementation, the network state parameter includes one or more of the following: a network load, a connection establishment time, or a service availability.

In a possible implementation, the identification information of the cell or the beam is pre-configured in the terminal; or, the identification information of the cell or the beam is carried in a system message transmitted by a network device corresponding to the cell or the beam to the terminal.

In a possible implementation, the pre-configuration of the identification information of the cell or the beam in the terminal includes one or more of the following:
the identification information of the cell or the beam being pre-configured in an extensible markup language (XML) file of the terminal; or,
the identification information of the cell or the beam being pre-configured in a subscriber identity module (SIM) of the terminal.

In a possible implementation, the identification information of the cell includes an identifier of a PLMN to which the cell belongs and an identifier of the cell; the identification information of the beam includes an identifier of a PLMN to which the beam belongs and beam information of the beam.

In a possible implementation, the signal quality parameter(s) include one or more of the following:
a reference signal received power (RSRP);
a reference signal received quality (RSRQ);
a received signal strength indicator (RSSI); or,
a signal to interference plus noise ratio (SINR).

In a possible implementation, the travel information of the terminal includes one or more of the following:
a weather type of scenario where the terminal is located;
location information of the terminal;
a type of scenario where the terminal is located;
a type of road where the terminal is located;
a travel speed of the terminal;
a travel direction of the terminal; or,
a traffic condition of the terminal.

In a possible implementation, the first trigger condition includes one or more of the following:
a signal quality parameter corresponding to the serving cell or the serving beam being less than or equal to a preset quality threshold;
a network performance parameter corresponding to the serving cell or the serving beam becoming worse;
a change in a type of scenario where the terminal is located;
a change in a type of a road where the terminal is located; or,
a current mode of the terminal being an autonomous driving mode.

In a possible implementation, the processing module 1702 is further configured to perform a network registration based on a power-on instruction, and perform real-time monitoring on a network of a current serving cell to obtain signal quality data of the current serving cell and a duration corresponding to the signal quality data of the current serving cell;
the processing module 1702 is further configured to construct an available cell list when the current serving cell meets the second trigger condition, wherein the second trigger condition refers to that the signal quality data is lower than a first preset threshold and the duration of the signal quality data being lower than the first preset threshold exceeds a first preset time;
the processing module 1702 is further configured to measure signal quality of cell(s) in the available cell list based on a preset measurement strategy to determine a target cell; perform the second network handover based on the target cell, where when the target cell is a cellular cell, the network is switched to a cellular network corresponding to the cellular cell, and when the target cell is a satellite cell, the network is switched to a non-terrestrial network corresponding to the satellite cell.

In a possible implementation, the processing module 1702 is further configured to: acquire current location information, determine a public land mobile network identifier corresponding to the location information based on a database cell table that is updated in real time, and determine corresponding available cellular cell information based on the public land mobile network identifier, where the database cell table is constructed and updated by the terminal device;
determine a target overpassing satellite identification (ID) based on the location information, and determine satellite cell information corresponding to the target overpassing satellite ID based on the database cell table to obtain available satellite cell information;
generate the available cell list according to the available cellular cell information and the available satellite cell information.

In a possible implementation, the processing module 1702 is further configured to, before generating the available cell list, if real-time system information is received, generate the available cell list according to the system information, the available cellular cell information, and the available satellite cell information.

In a possible implementation, the processing module 1702 is further configured to: acquire preset configuration information, and generate the database cell table according to the preset configuration information, where the preset configuration information includes historical registered cell information, cellular operation network information, and non-terrestrial operation network information;
based on the registered network, receive system information of the current serving cell delivered by a network side in real time to obtain serving cell information and neighbor cell information at a current moment;
update the database cell table according to the serving cell information and the neighbor cell information.

In a possible implementation, the processing module 1702 is further configured to, after generating the database cell table, if an instruction to enter a C-V2X service scenario is received, acquire terminal sharing information within a preset range based on the current location information, where the terminal sharing information includes cell information shared by a plurality of adjacent terminal devices within the preset range; and update the database cell table according to the terminal sharing information.

In a possible implementation, the processing module 1702 is further configured to, after generating the database cell table, if OTA information pushed by a cloud database is received, update the database cell table based on the OTA information.

In a possible implementation, the processing module 1702 is further configured to: acquire current time information and current ephemeris data; perform an ephemeris calculation on the location information, the time information, and the ephemeris data to obtain an ephemeris calculation result and store the ephemeris calculation result, where the location information includes altitude information, longitude information and latitude information, and the ephemeris calculation result includes a satellite ID and running trajectory data corresponding to each satellite;
perform an ephemeris estimation on the ephemeris calculation result to obtain an ephemeris estimation result and store the ephemeris estimation result, where the ephemeris estimation result includes a satellite ID, an arrival time, and a departure time corresponding to each satellite;
determine a surrounding satellite ID corresponding to the location information according to the running trajectory data corresponding to each satellite in the ephemeris calculation result; obtain an arrival time and a departure time corresponding to the surrounding satellite ID based on the ephemeris estimation result, and determine the target overpassing satellite ID corresponding to the terminal device.

In a possible implementation, the processing module 1702 is further configured to, after generating the database cell table, update the non-terrestrial operation network information in the database cell table according to the ephemeris calculation result and the ephemeris estimation result.

In a possible implementation, the processing module 1702 is further configured to, when the preset measurement strategy is a sequential measurement strategy, perform a polling measurement on cell(s) in the available cell list; obtain signal quality data of a cell and a duration corresponding to the signal quality data of the cell for each measurement, and determine whether a signal quality of the cell meets a preset communication condition, where the preset communication condition refers to that the signal quality data is higher than a second preset threshold and the duration of the signal quality data being higher than the second preset threshold exceeds a second preset time;
determine a first cell whose signal quality meets the preset communication condition obtained through the polling measurement as the target cell;
if no cell in the available cell list has a signal quality that meets the preset communication condition through the polling measurement, continue to monitor the signal quality of the current serving cell.

In a possible implementation, the processing module 1702 is further configured to, when the preset measurement strategy is a full measurement strategy, measure a signal quality of each cell in the available cell list to obtain signal quality data and a duration corresponding to each cell in the available cell list;
determine whether a signal quality of a corresponding cell meets a preset communication condition according to the signal quality data and the duration corresponding to each cell, and sort cell(s) that meet the preset communication condition to obtain a sorting result; and determine the target cell according to the sorting result.

The network handover apparatus 170 provided in the embodiment can execute the method performed by the terminal in the above method embodiments. The implementation principle and technical effects thereof are similar, which will not be repeated here.

FIG. 18 is a second structural diagram of a network handover apparatus provided by an embodiment of the present application. As shown in FIG. 18, the network handover apparatus 180 provided in this embodiment includes:
a transceiving module 1801, configured to transmit, to a terminal, network quality parameter(s) corresponding to a cell or a beam, where the network quality parameter(s) corresponding to the cell or the beam is used by an AI model of the terminal for processing to obtain first identification information, and the first identification information is used by the terminal to perform a cell handover or a beam handover when a cell or a beam indicated by the first identification information is different from a serving cell or a serving beam of the terminal.

The network handover apparatus 180 provided in this embodiment can execute the method performed by the network device in the above method embodiments. The implementation principle and technical effects thereof are similar, which will not be repeated here.

In a possible implementation, the PLMN is a PLMN that the terminal has accessed.

In a possible implementation, the transceiving module 1801 is further configured to: receive request information transmitted by the terminal, where the request information is used to request to acquire the network quality parameter(s) corresponding to the cell or the beam.

In a possible implementation, the network quality parameter(s) corresponding to the cell or the beam include one or more of the following:
a network performance parameter corresponding to the cell or the beam;
a quality of service parameter corresponding to the cell or the beam; or,
a network state parameter corresponding to the cell or the beam.

In a possible implementation, the network performance parameter includes one or more of the following: a bandwidth, a delay, a jitter, a packet loss rate, a throughput, or a bit error rate.

In a possible implementation, the quality of service parameter includes one or more of the following: a bandwidth guarantee, a maximum delay, a maximum jitter, a maximum packet loss rate, or a priority.

In a possible implementation, the network state parameter includes one or more of the following: a network load, a connection establishment time, or a service availability.

The network handover apparatus 180 provided in this embodiment can execute the method performed by the network device in the above method embodiments. The implementation principle and technical effects thereof are similar, which will not be repeated here.

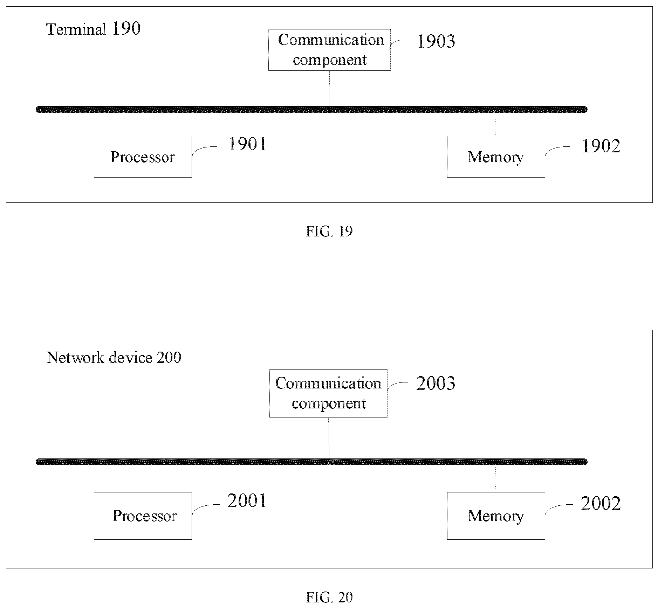

FIG. 19 is a structural diagram of a terminal provided by an embodiment of the present application. As shown in FIG. 19, the terminal 190 provided in this embodiment includes at least one processor 1901 and a memory 1902. Optionally, the device 190 further includes a communication component 1903. The processor 1901, the memory 1902, and the communication component 1903 are connected via a bus 1904.

In a specific implementation process, the at least one processor 1901 executes computer-executable instructions stored in the memory 1902, causing the at least one processor 1901 to execute the above method.

For the specific implementation process of the processor 1901, reference may be made to the method executed by the terminal in the above method embodiments. The implementation principle and technical effects thereof are similar, which will not be repeated here.

FIG. 20 is a structural diagram of a network device provided by an embodiment of the present application. As shown in FIG. 20, the network device 200 provided in this embodiment includes at least one processor 2001 and a memory 2002. Optionally, the device 200 further includes a communication component 2003. The processor 2001, the memory 2002, and the communication component 2003 are connected via a bus 2004.

In a specific implementation process, the at least one processor 2001 executes computer-executable instructions stored in the memory 2002, causing the at least one processor 2001 to execute the above method.

For the specific implementation process of the processor 2001, reference may be made to the method executed by the network device in the above method embodiments. The implementation principle and technical effects thereof are similar, and will not be repeated here.

In the above embodiments, it should be understood that, the processor can be a central processing unit (CPU), or other general-purpose processors, a digital signal processor (DSP), an application specific integrated circuit (ASIC), etc. The general-purpose processor can be a microprocessor, or the processor can also be any conventional processor, etc. The steps of the method disclosed in combination with the present application can be directly embodied as being executed and completed by a hardware processor, or executed and completed by a combination of hardware and software modules in the processor.

The memory may include a high-speed random access memory (RAM), and may also include a non-volatile memory (NVM), such as at least one disk memory.

The bus can be an industry standard architecture (ISA) bus, a peripheral component interconnect (PCI) bus, an extended industry standard architecture (EISA) bus, etc. The bus can be divided into an address bus, a data bus, a control bus, etc. For ease of representation, the bus in the drawings of the present application is not limited to only one bus or one type of bus.

The present application also provides a communication system, including the aforementioned terminal and the at least one network device.

The present application also provides a computer program product, including a computer program. When the computer program is executed by a processor, any of the above methods is implemented.

The present application also provides a computer-readable storage medium, having computer-executable instructions stored therein. When the computer-executable instructions are executed by a processor, any of the above methods is implemented.

The present application also provides a computer program. When the computer program is executed by a processor, any of the above methods is implemented.

The above readable storage medium can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium can be any available medium that can be accessed by a general-purpose computer or a special-purpose computer.

An exemplary readable storage medium is coupled to the processor, enabling the processor to read information from the readable storage medium and write information to the readable storage medium. Of course, the readable storage medium can also be an integral part of the processor. The processor and the readable storage medium can be located in an application specific integrated circuit (ASIC). Of course, the processor and the readable storage medium can also exist as discrete components in the device.

The division of units is only a logical function division. In an actual implementation, there may be other division manners. For example, multiple units or multiple components may be combined or integrated into another system, or some features may be ignored or not executed. In addition, the mutual coupling or direct coupling or communication connection shown or discussed may be through some interfaces, indirect coupling or communication connection of apparatuses or units, which may be electrical, mechanical, or other forms.

The units described as separate components may or may not be physically separated. The components displayed as units may or may not be physical units, that is, they may be located in one place or distributed across multiple network units. Some or all of the units may be selected according to actual needs to achieve the purpose of the solution of the embodiments.

In addition, various functional units in various embodiments of the present invention can be integrated into one processing unit, or each separate unit exist physically, or two or more units can be integrated into one unit.

If a function is implemented in a form of a software functional unit and sold or used as an independent product, it can be stored in a computer-readable storage medium. Based on this understanding, the technical solution of the present invention essentially or the part contributing to the prior art or the part of the technical solution can be embodied in the form of a software product. The computer software product is stored in a storage medium and includes several instructions to enable a computer device (which may be a personal computer, a server, or a PLMN, etc.) to execute all or part of the steps of the methods described in the various embodiments of the present invention. The aforementioned storage medium includes various media that can store program codes, such as a USB disk, a mobile hard disk, a read-only memory (ROM), a random access memory (RAM), a magnetic disk, or an optical disk, etc.

Those of ordinary skill in the art can understand that, all or part of the steps of the above method embodiments can be completed by hardware related to program instructions. The aforementioned program can be stored in a computer-readable storage medium. When being executed, the program executes the steps of the above method embodiments. The aforementioned storage medium includes various media that can store program codes, such as a ROM, a RAM, a magnetic disk, or an optical disk, etc.

Finally, it should be noted that, those skilled in the art will readily think of other implementations of the present invention after considering the specification and practicing the invention disclosed herein. The present invention is intended to cover any variations, uses, or adaptive changes of the present invention. These variations, uses, or adaptive changes follow the general principles of the present invention and include common general knowledge or customary technical means in the technical field not disclosed in the present invention. It is not limited to the precise structure that has been described above and shown in the drawings, and can make various modifications and changes without departing from the scope. The scope of the present invention is only limited by the appended claims.

## Claims

1. A network handover method, applied to a terminal, comprising:
in response to a first trigger condition, performing (S101) a first network handover based on a first handover strategy, wherein the first handover strategy is a strategy for performing the first network handover through an artificial intelligence, AI, model at least based on feature data of the terminal;
in response to a second trigger condition, performing (S102) a second network handover based on a second handover strategy, wherein the second handover strategy is a strategy for performing the second network handover based on a measurement result of each available cell for the terminal;
wherein the first trigger condition and the second trigger condition are pre-configured trigger conditions.

2. The method according to claim 1, wherein the performing (S101) the first network handover based on the first handover strategy comprises:
receiving a network quality parameter corresponding to at least one cell or at least one beam of each of at least one public land mobile network, PLMN;
processing (S202, S303), through the AI model, identification information of the at least one cell or the at least one beam of each PLMN, and the network quality parameter corresponding to the at least one cell or the at least one beam of each PLMN, to obtain first identification information; or, acquiring (S402, S502) a signal quality parameter corresponding to the at least one cell or the at least one beam of each PLMN; processing (S403), through the AI model, identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain first identification information; or,
acquiring (S502, S503) travel information of the terminal and a signal quality parameter corresponding to the at least one cell or the at least one beam of each PLMN; processing (S504), through the AI model, the travel information of the terminal, identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain first identification information;
wherein the first identification information is identification information of one of the at least one cell or the at least one beam of each PLMN;
when a cell or a beam indicated by the first identification information is different from a serving cell or a serving beam of the terminal, performing (S203, S304, S505) a cell handover or a beam handover.

3. The method according to claim 2, wherein,
when the feature data of the terminal comprises the network quality parameter corresponding to the at least one cell or the at least one beam of each PLMN, inputting the network quality parameter and the identification information of the at least one cell or the at least one beam of each PLMN into the AI model, obtaining at least one quality score corresponding to the identification information of the at least one cell or the at least one beam of each PLMN, and determining identification information corresponding to a maximum quality score among the at least one quality score as the first identification information; or, for each cell or each beam among the at least one cell or the at least one beam of each PLMN, determining a state corresponding to a cell or a beam according to a network quality parameter corresponding to the cell or the beam, and performing processing on at least one state of the at least one cell or the at least one beam of each PLMN through the AI model to obtain the first identification information;
when the feature data of the terminal comprises the network quality parameter corresponding to the at least one cell or the at least one beam of each PLMN, and the signal quality parameter corresponding to the at least one cell or the at least one beam of each PLMN, inputting the network quality parameter, the signal quality parameter, and the identification information of the at least one cell or the at least one beam of each PLMN into the AI model, obtaining at least one quality score corresponding to the identification information of the at least one cell or the at least one beam of each PLMN, and determining identification information corresponding to a maximum quality score among the at least one quality score as the first identification information; or, for each cell or each beam among the at least one cell or the at least one beam of each PLMN, determining a state corresponding to a cell or a beam according to a signal quality parameter and a network quality parameter corresponding to the cell or the beam, and performing processing on at least one state of the at least one cell or the at least one beam of each PLMN through the AI model to obtain the first identification information;
when the feature data of the terminal comprises the network quality parameter corresponding to the at least one cell or the at least one beam of each PLMN, the signal quality parameter corresponding to the at least one cell or the at least one beam of each PLMN, and the travel information of the terminal, inputting the network quality parameter, the signal quality parameter, the travel information of the terminal, and the identification information of the at least one cell or the at least one beam of each PLMN into the AI model, obtaining at least one quality score corresponding to the identification information of the at least one cell or the at least one beam of each PLMN, and determining identification information corresponding to a maximum quality score among the at least one quality score as the first identification information; or, for each cell or each beam among the at least one cell or the at least one beam of each PLMN, determining a state corresponding to a cell or a beam according to a signal quality parameter and a network quality parameter corresponding to the cell or the beam, and the travel information of the terminal, and performing processing on at least one state of the at least one cell or the at least one beam of each PLMN through the AI model to obtain the first identification information;
wherein the AI model comprises a reinforcement learning model, the first identification information is an action corresponding to a maximum Q value in a Q table of the reinforcement learning model, and the action corresponding to the maximum Q value represents identification information corresponding to the maximum Q value;
wherein the Q table comprises a plurality of actions, a plurality of states, and a Q value corresponding to each pair of action and state;
preferably, the method further comprises: acquiring a new state corresponding to the cell or the beam indicated by the first identification information, determining a reward according to the new state, and determining a new Q value according to the new state and the reward, so as to update the Q table based on the new Q value.

4. The method according to claim 2, wherein,
the processing (S202, S303), through the AI model, the identification information of the at least one cell or the at least one beam of each PLMN, and the network quality parameter corresponding to the at least one cell or the at least one beam of each PLMN, to obtain the first identification information, comprises: processing, through a first sub-model in the AI model, the identification information of the at least one cell or the at least one beam of each PLMN, and the network quality parameter corresponding to the at least one cell or the at least one beam of each PLMN, to obtain a quality score of the at least one cell or the at least one beam of each PLMN; and processing, through a second sub-model in the AI model, the network quality parameter corresponding to the at least one cell or the at least one beam of each PLMN, and the quality score of the at least one cell or the at least one beam of each PLMN, to obtain the first identification information; or,
the processing (S403), through the AI model, the identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain the first identification information, comprises: processing, through a first sub-model in the AI model, the identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain a quality score of the at least one cell or the at least one beam of each PLMN; and processing, through a second sub-model in the AI model, the signal quality parameter corresponding to the at least one cell or the at least one beam of each PLMN, the network quality parameter corresponding to the at least one cell or the at least one beam of each PLMN, and the quality score of the at least one cell or the at least one beam of each PLMN, to obtain the first identification information; or,
the processing (S504), through the AI model, the travel information of the terminal, the identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain the first identification information, comprises: processing, through a first sub-model in the AI model, the travel information of the terminal, the identification information of the at least one cell or the at least one beam of each PLMN, the signal quality parameter corresponding to the at least one cell or the at least one beam of each PLMN, and the network quality parameter corresponding to the at least one cell or the at least one beam of each PLMN, to obtain a quality score of the at least one cell or the at least one beam of each PLMN; and processing, through a second sub-model in the AI model, the travel information of the terminal, the signal quality parameter corresponding to the at least one cell or the at least one beam of each PLMN, the network quality parameter corresponding to the at least one cell or the at least one beam of each PLMN, and the quality score of the at least one cell or the at least one beam of each PLMN, to obtain the first identification information.

5. The method according to claim 4, wherein the first sub-model comprises a supervised learning model, and the second sub-model comprises a reinforcement learning model;
when the feature data of the terminal comprises the network quality parameter corresponding to the at least one cell or the at least one beam of each PLMN, obtaining the quality score of the at least one cell or the at least one beam of each PLMN through the supervised learning model; for each cell or each beam among the at least one cell or the at least one beam of each PLMN, determining a state corresponding to a cell or a beam according to a network quality parameter corresponding to the cell or the beam; processing, through the reinforcement learning model, the state and the quality score of the at least one cell or the at least one beam of each PLMN, to obtain the first identification information;
when the feature data of the terminal comprises the network quality parameter corresponding to the at least one cell or the at least one beam of each PLMN, and the signal quality parameter corresponding to the at least one cell or the at least one beam of each PLMN, obtaining the quality score of the at least one cell or the at least one beam of each PLMN through the supervised learning model; for each cell or each beam among the at least one cell or the at least one beam of each PLMN, determining a state corresponding to a cell or a beam according to a network quality parameter and a signal quality parameter corresponding to the cell or the beam; processing, through the reinforcement learning model, the state and the quality score of the at least one cell or the at least one beam of each PLMN, to obtain the first identification information;
when the feature data of the terminal comprises the network quality parameter corresponding to the at least one cell or the at least one beam of each PLMN, the signal quality parameter corresponding to the at least one cell or the at least one beam of each PLMN, and the travel information of the terminal, obtaining the quality score of the at least one cell or the at least one beam of each PLMN through the supervised learning model; for each cell or each beam among the at least one cell or the at least one beam of each PLMN, determining a state corresponding to a cell or a beam according to a network quality parameter and a signal quality parameter corresponding to the cell or the beam, and the travel information of the terminal; processing, through the reinforcement learning model, the state and the quality score of the at least one cell or the at least one beam of each PLMN, to obtain the first identification information;
preferably, the method further comprises:
acquiring a network performance parameter corresponding to the cell or the beam indicated by the first identification information;
obtaining a reward for the reinforcement learning model according to the network performance parameter and a quality score corresponding to the first identification information; and/or
adjusting an identification selection probability of the reinforcement learning model according to the quality score corresponding to the first identification information;
wherein the reinforcement learning model is updated according to the reward and/or the adjusted identification selection probability, and updated identification information is obtained based on the updated reinforcement learning model.

6. The method according to any one of claims 2 to5, wherein,
the travel information of the terminal is travel information of the terminal within a preset future duration; the signal quality parameter corresponding to the at least one cell or the at least one beam of each PLMN is a signal quality parameter corresponding to the at least one cell or the at least one beam of each PLMN within the preset future duration;
the network quality parameter corresponding to the at least one cell or the at least one beam of each PLMN is a network quality parameter corresponding to the at least one cell or the at least one beam of each PLMN within the preset future duration.

7. The method according to any one of claims 2 to 6, wherein,
the performing (S203, S304, S505) the cell handover, comprising:
performing a handover from the serving cell to the cell indicated by the first identification information;
the performing (S203, S304, S505) the beam handover, comprising:
performing a handover from the serving beam to the beam indicated by the first identification information;
preferably, the at least one PLMN is a PLMN that the terminal has accessed.

8. The method according to any one of claims 2 to 7, wherein the identification information of the cell or the beam is pre-configured in the terminal; or, the identification information of the cell or the beam is carried in a system message transmitted by a network device corresponding to the cell or the beam to the terminal;
preferably, the pre-configuration of the identification information of the cell or the beam in the terminal comprises one or more of the following: pre-configuring the identification information of the cell or the beam in an extensible markup language, XML, file of the terminal; or, pre-configuring the identification information of the cell or the beam in a subscriber identity module, SIM, of the terminal;
preferably, the identification information of the cell comprises an identifier of a PLMN to which the cell belongs, and an identifier of the cell; the identification information of the beam comprises an identifier of a PLMN to which the beam belongs, and beam information of the beam.

9. The method according to any one of claims 1 to 8, wherein the performing (S102) the second network handover based on the second handover strategy in response to the second trigger condition comprises:
performing (S1001) a network registration based on a power-on instruction, and performing (S1001) real-time monitoring on a network of a current serving cell of the terminal to obtain signal quality data of the current serving cell and a duration corresponding to the signal quality data of the current serving cell;
when the current serving cell meets the second trigger condition, constructing (S1002) an available cell list, wherein the second trigger condition refers to that the signal quality data is lower than a first preset threshold and the duration of the signal quality data being lower than the first preset threshold exceeds a first preset time;
measuring (S1003), based on a preset measurement strategy, a signal quality of a cell in the available cell list to determine a target cell; and performing (S1003) the second network handover based on the target cell, wherein when the target cell is a cellular cell, the network is switched to a cellular network corresponding to the cellular cell, and when the target cell is a satellite cell, the network is switched to a non-terrestrial network corresponding to the satellite cell.

10. The method according to claim 9, wherein the constructing (S1002) the available cell list comprises:
acquiring current location information, determining a public land mobile network identifier corresponding to the location information based on a database cell table that is updated in real time, and determining corresponding available cellular cell information based on the public land mobile network identifier, wherein the database cell table is constructed and updated by the terminal;
determining a target overpassing satellite identification, ID, based on the location information, and determining satellite cell information corresponding to the target overpassing satellite ID based on the database cell table to obtain available satellite cell information;
generating the available cell list according to the available cellular cell information and the available satellite cell information;
preferably, the method further comprises:
when real-time system information is received, generating the available cell list according to the system information, the available cellular cell information, and the available satellite cell information.

11. The method according to claim 10, wherein the construction and update of the database cell table comprises:
acquiring preset configuration information, and generating the database cell table according to the preset configuration information, wherein the preset configuration information comprises historical registered cell information, cellular operation network information, and non-terrestrial operation network information;
based on the registered network, receiving system information of the current serving cell delivered by a network side in real time to obtain serving cell information and neighbor cell information at a current moment; and updating the database cell table according to the serving cell information and the neighbor cell information;
preferably, the method further comprises:
when an instruction to enter a C-V2X service scenario is received, acquiring terminal sharing information within a preset range based on the current location information, wherein the terminal sharing information comprises cell information shared by a plurality of adjacent terminals within the preset range; and updating the database cell table according to the terminal sharing information;
preferably, the method further comprises:
when over-the-air technology, OTA, information pushed by a cloud database is received, updating the database cell table based on the OTA information.

12. The method according to claim 10 or 11, wherein the determining the target overpassing satellite ID based on the location information comprises:
acquiring current time information and current ephemeris data; performing an ephemeris calculation on the location information, the time information, and the ephemeris data to obtain an ephemeris calculation result and storing the ephemeris calculation result, wherein the location information comprises altitude information, longitude information and latitude information, and the ephemeris calculation result comprises a satellite ID and running trajectory data corresponding to each satellite;
performing an ephemeris estimation on the ephemeris calculation result to obtain an ephemeris estimation result and storing the ephemeris estimation result, wherein the ephemeris estimation result comprises a satellite ID, an arrival time, and a departure time corresponding to each satellite;
determining a surrounding satellite ID corresponding to the location information according to the running trajectory data corresponding to each satellite in the ephemeris calculation result; obtaining an arrival time and a departure time corresponding to the surrounding satellite ID based on the ephemeris estimation result, and determining the target overpassing satellite ID corresponding to the terminal;
preferably, the method further comprises:
updating the non-terrestrial operation network information in the database cell table according to the ephemeris calculation result and the ephemeris estimation result.

13. The method according to any one of claims 9 to 12, further comprising:
when the preset measurement strategy is a sequential measurement strategy, performing a polling measurement on a cell in the available cell list; obtaining signal quality data of a cell and a duration corresponding to the signal quality data of the cell for each measurement, and determining whether a signal quality of the cell meets a preset communication condition, wherein the preset communication condition refers to that the signal quality data is higher than a second preset threshold and the duration of the signal quality data being higher than the second preset threshold exceeds a second preset time; determining a first cell whose signal quality meets the preset communication condition obtained through the polling measurement as the target cell; when no cell in the available cell list has a signal quality that meets the preset communication condition through the polling measurement, continuing to monitor the signal quality data of the current serving cell; or,
when the preset measurement strategy is a full measurement strategy, measuring a signal quality of each cell in the available cell list to obtain signal quality data and a duration corresponding to each cell in the available cell list; determining whether a signal quality of a corresponding cell meets a preset communication condition according to the signal quality data and the duration corresponding to each cell, and sorting cells that meet the preset communication condition to obtain a sorting result; and determining the target cell according to the sorting result.

14. The method according to any one of claims 1 to 13, wherein the first trigger condition at least comprises any one of the following:
a signal quality parameter corresponding to a serving cell or a serving beam of the terminal being less than or equal to a preset quality threshold;
a network performance parameter corresponding to a serving cell or a serving beam of the terminal becoming worse;
a change in a type of scenario where the terminal is located;
a change in a type of a road where the terminal is located; or,
a current mode of the terminal being an autonomous driving mode.

15. A terminal (190), comprising: a memory (1902) and a processor (1901);
the memory (1902) is stored with computer-executable instructions;
the processor (1901) executes the computer-executable instructions stored in the memory (1902), causing the processor (1901) to execute the method according to any one of claims 1 to 14.
